(19) **Europäisches Patentamt**
**European Patent Office**
**Office européen des brevets**

(11) **EP 4 576 627 A1**

(12) **EUROPEAN PATENT APPLICATION**
published in accordance with Art. 153(4) EPC

(43) Date of publication:
25.06.2025 Bulletin 2025/26

(51) International Patent Classification (IPC):
**H04L 1/18** (2023.01)

(21) Application number: 23867531.8

(52) Cooperative Patent Classification (CPC):
**H04L 1/18; H04L 1/1812; H04L 5/00; H04W 72/23**

(22) Date of filing: 19.09.2023

(86) International application number:
**PCT/CN2023/119867**

(87) International publication number:
**WO 2024/061244 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 19.09.2022 CN 202211139045

(71) Applicant: Honor Device Co., Ltd.
Shenzhen, Guangdong 518040 (CN)

(72) Inventors:
• ZHANG, Mingzhu
  Shenzhen, Guangdong 518040 (CN)
• ZENG, Yongbo
  Shenzhen, Guangdong 518040 (CN)
• SHAN, Baokun
  Shenzhen, Guangdong 518040 (CN)

(74) Representative: Goddar, Heinz J.
Boehmert & Boehmert
Anwaltspartnerschaft mbB
Pettenkoferstrasse 22
80336 München (DE)

(54) **HARQ PROCESS IDENTIFIER DETERMINING METHOD AND APPARATUS, DEVICE AND STORAGE MEDIUM**

(57) This application discloses a HARQ process identifier determining method and apparatus, a device, and a storage medium, and belongs to the field of communication technologies. In the method, semi-static resource configuration information is received, where the semi-static resource configuration information indicates to configure a semi-static resource, and the semi-static resource includes a plurality of sets of resources. A terminal determines a HARQ process identifier for each resource in the semi-static resource based on a target time domain interval or a target flag value. In this way, the terminal determines HARQ process identifiers for all resources in the semi-static resource in a unified determining manner by using the plurality of sets of resources in the semi-static resource as a whole. Because an independent identifier offset does not need to be introduced to determine a HARQ process identifier for each set of resources in the semi-static resource, a number of used HARQ processes is reduced, and system capacity is improved.

FIG. 6

**Description**

This application claims priority to Chinese Patent Application No. 202211139045.8, filed with the China National Intellectual Property Administration on September 19, 2022 and entitled "HARQ PROCESS IDENTIFIER DETERMINING METHOD AND APPARATUS, DEVICE, AND STORAGE MEDIUM", which is incorporated herein by reference in its entirety.

**TECHNICAL FIELD**

This application relates to the field of communication technologies, and in particular, to a HARQ process identifier determining method and apparatus, a device, and a storage medium.

**BACKGROUND**

An extended reality (Extended Reality, XR) service means integrating reality and virtuality by using a computer to create a human-computer interactive virtual environment, and is also a general term of a plurality of technologies such as augmented reality (Augmented Reality, AR), virtual reality (Virtual Reality, VR), mixed reality (Mediated Reality, MR), and cloud gaming (Cloud Gaming, CG). Three visual interaction technologies are fused by using a hardware device in combination with a plurality of technical means, to fuse virtual content and a real scene, bringing an experiencer "immersive" experience of seamless switching between a virtual world and a real world.

A scheduling cycle for the XR service is a non-integer scheduling cycle, and may include 33.33 ms (milliseconds), 16.67 ms, 11.11 ms, 8.33 ms, and the like. However, there are no granularity values such as 0.33 ms and 0.11 ms in time domain of a new radio (New Radio, NR) system, so it is difficult to directly configure the non-integer scheduling cycle for the XR service based on time domain division of the NR system. Therefore, in the related technology, a plurality of sets of resources are configured for the XR service, and time domain matching for the XR service is implemented by using a time offset in time domain, that is, the non-integer scheduling cycle for the XR service is configured.

To ensure normal transmission of data on each resource, currently, each resource is associated with a hybrid automatic repeat request (Hybrid Automatic Repeat Request, HARQ) process. For proper use of HARQ processes, HARQ process identifiers associated with resources in a set of resources typically tend to increase. If a plurality of sets of resources are configured for the XR service, it needs to be ensured that HARQ processes associated with resources in each of the plurality of sets of resources do not conflict. In the related technology, in this case, a method for avoiding a conflict between the HARQ processes is to introduce an identifier offset during calculation of HARQ process identifiers. Specifically, HARQ process identifiers may be normally calculated for a $1^{st}$ set of resources in the plurality of sets of resources, and HARQ process identifiers may be calculated for another set of resources by introducing an identifier offset. In addition, a different identifier offset is introduced to calculate HARQ process identifiers for each set of resources in the another set of resources. However, this may cause an increase in a number of HARQ processes used by the plurality of sets of resources, resulting in a decrease in system capacity.

**SUMMARY**

This application provides a HARQ process identifier determining method and apparatus, a device, and a storage medium, to effectively reduce a number of HARQ processes required by a semi-static resource and improve system capacity. The technical solutions are as follows.

According to a first aspect, a HARQ process identifier determining method is provided. In the method, semi-static resource configuration information is received. A HARQ process identifier for each resource in a semi-static resource is determined based on a target time domain interval between adjacent resources in the semi-static resource. Alternatively, a HARQ process identifier for each resource in a semi-static resource is determined based on a target flag value, where the target flag value is associated with each resource in the semi-static resource, or the target flag value is a preset flag value.

The semi-static resource configuration information indicates to configure the semi-static resource. For example, the semi-static resource configuration information may be radio resource control (Radio Resource Control, RRC) information, media access control (Media Access Control, MAC) control unit (Control Element, CE) information, or downlink control information (Downlink Control Information, DCI). Certainly, the semi-static resource configuration information may alternatively be another type of information, provided that the semi-static resource can be configured by using the semi-static resource configuration information. This is not limited in this application.

The semi-static resource configuration information may be sent by a base station to a terminal. When the terminal needs to perform service data transmission with the base station, the base station may send the semi-static resource configuration information to the terminal, and the terminal may configure the corresponding semi-static resource based on the semi-static resource configuration information, and use the semi-static resource to send service data (that is, uplink service data) to the base station and receive service data (that is, downlink service data) sent by the base station.

The semi-static resource includes a plurality of sets of resources. Optionally, each of the plurality of sets of resources includes a plurality of resources. Optionally, each of the plurality of sets of resources may have a scheduling cycle. Optionally, scheduling cycles of the plurality of sets of resources may be the same or different. For example, the scheduling cycle of each of the plurality of sets of resources may be 50 ms. Optionally, a combination of the plurality of sets of resources may approximately satisfy a configuration of a non-integer scheduling cycle. For example, a time offset may be introduced for another set of resources other than a $1^{st}$ set of resources in the plurality of sets of resources, and corresponding time domain matching is implemented by using the time offset in time domain, to approximately satisfy the configuration of the non-integer scheduling cycle. Alternatively, a time domain offset of each set of resources may be implemented by using different activation time for each of the plurality of sets of resources, to approximately satisfy the configuration of the non-integer scheduling cycle.

For example, the semi-static resource includes M sets of resources. The semi-static resource includes resources in the M sets of resources in a time domain sequence. A $1^{st}$ resource in the semi-static resource is a resource that occurs first in time domain, a $2^{nd}$ resource in the semi-static resource is a resource that occurs second in time domain, a $3^{rd}$ resource in the semi-static resource is a resource that occurs third in time domain, and so on.

Optionally, there is a time domain interval between resources that are adjacent in time domain in the entire semi-static resource (that is, the plurality of sets of resources as a whole). In some cases, the time domain interval is used to implement a non-integer scheduling cycle desired when the semi-static resource is configured. In other words, time domain intervals between resources that are adjacent in time domain in the entire semi-static resource are the same or close, and are close to the non-integer scheduling cycle desired when the semi-static resource is configured.

It should be noted that if the semi-static resource occurs in a slot, the time domain interval between adjacent resources in the semi-static resource may also be referred to as a slot interval. If the semi-static resource occurs at a symbol, the time domain interval between adjacent resources in the semi-static resource may also be referred to as a symbol interval.

Optionally, the semi-static resource configuration information may further carry an identifier offset, and the identifier offset may be preset by the base station. The identifier offset is an offset between a HARQ process identifier for the semi-static resource and a HARQ process identifier for another resource. In other words, the identifier offset indicates a required offset of the HARQ process identifier for the semi-static resource relative to that of the another resource.

Optionally, HARQ process identifier configuration information may be received, where the HARQ process identifier configuration information may carry the identifier offset. The HARQ process identifier configuration information may be information sent by the base station to the terminal, to indicate to configure the HARQ process identifier. The HARQ process identifier configuration information and the semi-static resource configuration information may be the same information or different information, for example, may be different types of information or a same type of information sent at different time. This is not limited in this application. For example, the HARQ process identifier configuration information may be RRC information, MAC CE information, or DCI. Certainly, the HARQ process identifier configuration information may alternatively be another type of information, provided that the HARQ process identifier for the semi-static resource can be configured by using the HARQ process identifier configuration information. This is not limited in this application.

In this application, for each resource in each of the plurality of sets of resources in the semi-static resource, a HARQ process identifier may be determined based on the target time domain interval, or a HARQ process identifier may be determined based on the target flag value. In this way, HARQ process identifiers for all resources in the semi-static resource are determined in a unified determining manner by using the plurality of sets of resources in the semi-static resource as a whole. Because an independent identifier offset does not need to be introduced to determine a HARQ process identifier for each set of resources in the semi-static resource, not only complexity in determining the HARQ process identifier is reduced, but also efficiency of determining the HARQ process identifier is improved. In addition, a number of HARQ processes required by the semi-static resource can be effectively reduced, so that system capacity can be improved.

The target time domain interval may be determined based on the time domain interval between adjacent resources in the semi-static resource. Optionally, the target time domain interval indicates the non-integer scheduling cycle desired when the semi-static resource is configured. In other words, the target time domain interval is close to the non-integer scheduling cycle desired when the semi-static resource is configured. In an example, the target time domain interval may be an average value, a maximum value, or a minimum value of time domain intervals between adjacent resources in the semi-static resource. This is not limited in this application.

Optionally, the semi-static resource configuration information or the HARQ process identifier configuration information may include a determining rule for the target time domain interval. The determining rule indicates a manner of determining the target time domain interval. For example, the determining rule indicates whether to use the average value of the time domain intervals between the adjacent resources in the semi-static resource as the target time domain interval, use the maximum value of the time domain intervals between the adjacent resources in the semi-static resource as the target time domain interval, or use the minimum value of the time domain intervals between the adjacent resources in the semi-static resource as the target time domain interval. In other words, the determining rule is using the average value, the maximum value, or the minimum value of the time domain intervals between the adjacent resources in the semi-static resource as the target time domain interval. After the determining rule is received, the target time domain interval may be determined according to the determining rule and based on the time domain intervals between the adjacent resources in the semi-static resource.

Optionally, the semi-static resource configuration information may carry a time offset of each of the plurality of sets of resources in the semi-static resource. The time domain intervals between the adjacent resources in the semi-static resource may be determined based on the time offset of each of the plurality of sets of resources. In an example, if the semi-static resource includes the M sets of resources, a time offset of a 2nd set of resources may be used as a time domain interval, and a difference between a time offset of a 3rd set of resources and the time offset of the 2nd set of resources may be used as a time domain interval. By analogy, a difference between a time offset of an Mth set of resources and a time offset of an (M-1)th set of resources may be used as a time domain interval. In this way, a time domain interval between any two adjacent resources in the semi-static resource may be obtained. Then, the target time domain interval may be determined based on the time domain intervals between the adjacent resources in the semi-static resource.

The following describes a manner of determining the HARQ process identifier for each resource in the semi-static resource based on the target time domain interval between adjacent resources in the semi-static resource.

The operation of determining the HARQ process identifier for each resource in the semi-static resource based on the target time domain interval between adjacent resources in the semi-static resource may include any one of the following first possible manner to fourth possible manner.

In the first possible manner, if the semi-static resource occurs in the slot, for a current slot in the semi-static resource, the current slot is divided by the target time domain interval to obtain a first value. A round-down operation is performed on a value obtained by multiplying the first value by an adjustment factor, to obtain a second value. A modulo operation is performed on the second value and a preset number of HARQ processes to obtain a HARQ process identifier for the current slot.

If the semi-static resource occurs in the slot, the target time domain interval may be referred to as a target slot interval.

The current slot in the first possible manner may be any slot in the semi-static resource. Optionally, the current slot = a number of slots per frame * an SFN + a slot number in a frame, where the number of slots per frame is a number of slots per frame in the semi-static resource, the SFN is a system frame number (System Frame Number), and the slot number in the frame is a slot number of the current slot in the frame.

The adjustment factor may be preset. For example, the adjustment factor may be a value obtained by dividing a number of subframes per frame in the semi-static resource by the number of slots per frame in the semi-static resource. Certainly, the adjustment factor may alternatively be another value set based on an actual requirement. For example, in some cases, the adjustment factor may be 1.

The number of subframes per frame in the semi-static resource may be preset, for example, may be 10. In other words, in this application, the number of subframes per frame in the semi-static resource is a preset constant value. For example, the number of subframes per frame in the semi-static resource may be configured and notified to the terminal by the base station, or may be defined in a related communication protocol used by the terminal and the base station, or certainly, may be preset in another form. This is not limited in this application.

The number of slots per frame in the semi-static resource may be preset. In other words, in this application, the number of slots per frame in the semi-static resource may be a preset constant value. For example, the number of slots per frame in the semi-static resource may be configured and notified to the terminal by the base station, or may be defined in the related communication protocol used by the terminal and the base station, or certainly, may be preset in another form. This is not limited in this application.

The preset number of HARQ processes may be preset. In other words, in this application, the preset number of HARQ processes may be a preset constant value. The preset number of HARQ processes is the number of HARQ processes required by the semi-static resource. In other words, the preset number of HARQ processes is a number of HARQ processes configured for a service using the semi-static resource, and is a maximum number of HARQ processes that can be used for the service. For example, the preset number of HARQ processes may be configured and notified to the terminal by the base station, or may be defined in the related communication protocol used by the terminal and the base station, or certainly, may be preset in another form. This is not limited in this application.

Optionally, the first possible manner may be implemented by using the following programming language formula:

HARQ Process ID = [floor (CURRENT_slot $\times$ Z / p)] modulo nrofHARQ- Processes

HARQ Process ID is the HARQ process identifier for the current slot. CURRENT_slot is the current slot. p is the target time domain interval. Z is the adjustment factor, and for example, may be 10/the number of slots per frame.

nrofHARQ-Processes is the preset number of HARQ processes. floor is a round-down function. modulo is a modulo function.

In the first possible manner, second values obtained based on slots in the semi-static resource and the target time domain interval tend to increase, so that HARQ process identifiers for the slots that are obtained by performing modulo operations on the second values and the preset number of HARQ processes are 0, 1, ..., and Y-1. The HARQ process identifiers for the slots in the semi-static resource cycle continuously from 0 to Y-1, where Y is the preset number of HARQ processes. In this way, identifiers of Y HARQ processes associated with the semi-static resource may be determined, that is, the Y HARQ processes configured for the service using the semi-static resource are determined. It should be noted that when the HARQ process identifiers for the slots in the semi-static resource cycle continuously from 0 to Y-1, one cycle starts from a HARQ process identifier for a 1st slot in the semi-static resource, and ends at the HARQ process identifier for the 1st slot in the semi-static resource minus 1. The HARQ process identifier for the 1st slot in the semi-static resource may be any one of 0, 1, ..., and Y-1.

In the first possible manner, the semi-static resource is directly used as a whole, the target time domain interval is used as an actual scheduling cycle of the semi-static resource, and then the HARQ process identifier for the current slot is directly determined based on the current slot, the target time domain interval, and the preset number of HARQ processes. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

In a second possible manner, if the semi-static resource configuration information carries the identifier offset, and the semi-static resource occurs in the slot, for a current slot in the semi-static resource, the current slot is divided by the target time domain interval to obtain a first value. A round-down operation is performed on a value obtained by multiplying the first value by an adjustment factor, to obtain a second value. A value obtained by performing a modulo operation on the second value and a preset number of HARQ processes, and the identifier offset are added, to obtain a HARQ process identifier for the current slot.

If the semi-static resource occurs in the slot, the target time domain interval may be referred to as a target slot interval.

Optionally, the second possible manner may be implemented by using the following programming language formula:

$$\text{HARQ Process ID} = [\text{floor} (\text{CURRENT\_slot} \times Z / p)] \text{ modulo nrofHARQ-Processes} + \text{harq-ProcID-Offset}$$

HARQ Process ID is the HARQ process identifier for the current slot. CURRENT_slot is the current slot. p is the target time domain interval. Z is the adjustment factor, and for example, may be 10/the number of slots per frame. nrofHARQ-Processes is the preset number of HARQ processes. harq-ProcID-Offset is the identifier offset. floor is a round-down function. modulo is a modulo function.

When the semi-static resource configuration information carries the identifier offset, the identifier offset needs to be considered when the HARQ process identifier for each resource in the semi-static resource is determined. Therefore, after the second value is obtained based on the current slot and the target time domain interval, the value obtained by performing the modulo operation on the second value and the preset number of HARQ processes, and the identifier offset need to be added, to obtain the HARQ process identifier for the current slot. In this way, offset of a HARQ process identifier for a current resource in the semi-static resource relative to the HARQ process identifier for the another resource is implemented, thereby avoiding a conflict between the HARQ process identifier for the semi-static resource and the HARQ process identifier of the another resource.

In the second possible manner, second values obtained based on slots in the semi-static resource and the target time domain interval tend to increase, so that HARQ process identifiers for the slots that are obtained by adding values obtained by performing modulo operations on the second values and the preset number of HARQ processes, and the identifier offset are 0+F, 1+F, ..., and Y-1+F. The HARQ process identifiers for the slots in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined. It should be noted that when the HARQ process identifiers for the slots in the semi-static resource cycle continuously from 0 to Y-1, one cycle starts from a HARQ process identifier for a 1st slot in the semi-static resource, and ends at the HARQ process identifier for the 1st slot in the semi-static resource minus 1. The HARQ process identifier for the 1st slot in the semi-static resource may be any one of 0+F, 1+F, ..., and Y-1+F.

In the second possible manner, the semi-static resource is directly used as a whole, the target time domain interval is used as an actual scheduling cycle of the semi-static resource, and then the HARQ process identifier for the current slot is directly determined based on the current slot, the target time domain interval, the preset number of HARQ processes, and the identifier offset. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

In a third possible manner, if the semi-static resource occurs at the symbol, for a current symbol in the semi-static resource, a round-down operation is performed on a value obtained by dividing the current symbol by the target time domain interval, to obtain a third value. A modulo operation is performed on the third value and a preset number of HARQ processes to obtain a HARQ process identifier for the current symbol.

If the semi-static resource occurs at the symbol, the target time domain interval may be referred to as a target symbol interval.

The current symbol in the third possible manner may be any symbol in the semi-static resource. Optionally, the current symbol = a number of slots per frame * a number of symbols per slot * an SFN + a slot number in a frame * the number of slots per frame + a symbol number in a slot, where the number of slots per frame is a number of slots per frame in the semi-static resource, the number of symbols per slot is a number of symbols per slot in the semi-static resource, the slot number in the frame is a slot number of a slot to which the current symbol belongs in the frame, and the symbol number in the slot is a symbol number of the current symbol in the slot to which the current symbol belongs.

Optionally, the third possible manner may be implemented by using the following programming language formula:

HARQ Process ID = [floor(CURRENT_symbol / p)] modulo nrofHARQ- Processes

HARQ Process ID is the HARQ process identifier for the current symbol. CURRENT_symbol is the current symbol. p is the target time domain interval. nrofHARQ-Processes is the preset number of HARQ processes. floor is a round-down function. modulo is a modulo function.

In the third possible manner, third values obtained based on symbols in the semi-static resource and the target time domain interval tend to increase, so that HARQ process identifiers for the symbols that are obtained by performing modulo operations on the third values and the preset number of HARQ processes are 0, 1, ..., and Y-1. The HARQ process identifiers for the symbols in the semi-static resource cycle continuously from 0 to Y-1, where Y is the preset number of HARQ processes. In this way, identifiers of Y HARQ processes associated with the semi-static resource may be determined, that is, the Y HARQ processes configured for a service using the semi-static resource are determined. It should be noted that when the HARQ process identifiers for the symbols in the semi-static resource cycle continuously from 0 to Y-1, one cycle starts from a HARQ process identifier for a 1st symbol in the semi-static resource, and ends at the HARQ process identifier for the 1st symbol in the semi-static resource minus 1. The HARQ process identifier for the 1st symbol in the semi-static resource may be any one of 0, 1, ..., and Y-1.

In the third possible manner, the semi-static resource is directly used as a whole, the target time domain interval is used as an actual scheduling cycle of the semi-static resource, and then the HARQ process identifier for the current symbol is directly determined based on the current symbol, the target time domain interval, and the preset number of HARQ processes. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

In the fourth possible manner, if the semi-static resource configuration information carries the identifier offset, and the semi-static resource occurs at the symbol, for a current symbol in the semi-static resource, a round-down operation is performed on a value obtained by dividing the current symbol by the target time domain interval, to obtain a third value. A value obtained by performing a modulo operation on the third value and a preset number of HARQ processes, and the identifier offset are added, to obtain a HARQ process identifier for the current symbol.

If the semi-static resource occurs at the symbol, the target time domain interval may be referred to as a target symbol interval.

Optionally, the fourth possible manner may be implemented by using the following programming language formula:

HARQ Process ID = [floor(CURRENT_symbol / p)] modulo nrofHARQ-Processes + harq-ProcID-Offset

HARQ Process ID is the HARQ process identifier for the current symbol. CURRENT_symbol is the current symbol. p is the target time domain interval. nrofHARQ-Processes is the preset number of HARQ processes. harq-ProcID-Offset is the identifier offset. floor is a round-down function. modulo is a modulo function.

When the semi-static resource configuration information carries the identifier offset, the identifier offset needs to be considered when the HARQ process identifier for each resource in the semi-static resource is determined. Therefore, after the third value is obtained based on the current symbol and the target time domain interval, the value obtained by performing the modulo operation on the third value and the preset number of HARQ processes, and the identifier offset need to be added, to obtain the HARQ process identifier for the current symbol. In this way, offset of the HARQ process identifier for the current symbol in the semi-static resource relative to the HARQ process identifier for the another resource is implemented, thereby avoiding a conflict between the HARQ process identifier for the semi-static resource and the HARQ process identifier of the another resource.

In the fourth possible manner, third values obtained based on symbols in the semi-static resource and the target time domain interval tend to increase, so that HARQ process identifiers for the symbols that are obtained by adding values obtained by performing modulo operations on the third values and the preset number of the HARQ processes, and the identifier offset are 0+F, 1+F, ..., and Y-1+F. The HARQ process identifiers for the symbols in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined. It should be noted that when the HARQ process identifiers for the symbols in the semi-static resource cycle continuously from 0+F to Y-1+F, one cycle starts from a HARQ process identifier for a 1st symbol in the semi-static resource, and ends at the HARQ process identifier for the 1st symbol in the semi-static resource minus 1. The HARQ process identifier for the 1st symbol in the semi-static resource may be any one of 0+F, 1+F, ..., and Y-1+F.

In the fourth possible manner, the semi-static resource is directly used as a whole, the target time domain interval is used as an actual scheduling cycle of the semi-static resource, and then the HARQ process identifier for the current symbol is directly determined based on the current symbol, the target time domain interval, the preset number of HARQ processes, and the identifier offset. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

The following describes a manner of determining the HARQ process identifier for each resource in the semi-static resource based on the target flag value.

Optionally, the semi-static resource configuration information or the HARQ process identifier configuration information may include the target flag value.

If the target flag value is the preset flag value, for example, the preset flag value may be preset. In other words, in this application, the preset flag value may be a preset constant value. For example, the preset flag value may be configured and notified to the terminal by the base station, or may be defined in a related communication protocol used by the terminal and the base station, or certainly, may be preset in another form. This is not limited in this application.

When the target flag value is the preset flag value, the operation of determining the HARQ process identifier for each resource in the semi-static resource based on the target flag value may be implemented in any one of the following Manner A to Manner D.

Manner A: For a current resource in the semi-static resource, add the preset flag value and at least one preset increment to obtain a fourth value, and perform a modulo operation on the fourth value and a preset number of HARQ processes to obtain a HARQ process identifier for the current resource.

The current resource is a current slot or a current symbol. If the semi-static resource occurs in the slot, the current resource is the current slot; or if the semi-static resource occurs at the symbol, the current resource is the current symbol.

The preset increment may be preset. In this embodiment of this application, for each resource in the semi-static resource, when a fourth value is calculated, a number of preset increments to be added to the preset flag value may be different. For example, for the 1st resource in the semi-static resource, when a HARQ process identifier for the 1st resource is determined, the preset flag value and one preset increment may be added to obtain a fourth value. For the 2nd resource in the semi-static resource, when a HARQ process identifier for the 2nd resource is determined, the preset flag value and two preset increments may be added to obtain a fourth value. For the 3rd resource in the semi-static resource, when a HARQ process identifier for the 3rd resource is determined, the preset flag value and three preset increments may be added to obtain a fourth value. The rest is deduced by analogy. For resources in the semi-static resource, fourth values obtained by adding the preset flag value and the at least one preset increment increase.

Optionally, the semi-static resource configuration information or the HARQ process identifier configuration information may include the preset increment. For example, the semi-static resource configuration information or the HARQ process identifier configuration information may include the preset flag value and the preset increment, so that the terminal may determine the HARQ process identifier for each resource in the semi-static resource based on the preset flag value and the preset increment.

In Manner A, the fourth values obtained based on the preset flag value and the preset increment tend to increase, so that HARQ process identifiers for the resources that are obtained by performing modulo operations on the fourth values and the preset number of HARQ processes are 0, 1, ..., and Y-1. The HARQ process identifiers for the resources in the semi-static resource cycle continuously from 0 to Y-1, where Y is the preset number of HARQ processes. In this way, identifiers of Y HARQ processes associated with the semi-static resource may be determined, that is, the Y HARQ processes configured for a service using the semi-static resource are determined. It should be noted that when the HARQ process identifiers for the resources in the semi-static resource cycle continuously from 0 to Y-1, one cycle starts from a HARQ process identifier for the 1st resource in the semi-static resource, and ends at the HARQ process identifier for the 1st resource in the semi-static resource minus 1. The HARQ process identifier for the 1st resource in the semi-static resource may be any one of 0, 1, ..., and Y-1.

In Manner A, the semi-static resource is directly used as a whole, and the HARQ process identifier for the current resource is directly determined based on the preset flag value, the preset increment, and the preset number of HARQ processes. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

Manner B: If the semi-static resource configuration information carries the identifier offset, for a current resource in the semi-static resource, add the preset flag value and at least one preset increment to obtain a fourth value, and add a value obtained by performing a modulo operation on the fourth value and a preset number of HARQ processes, and the identifier offset, to obtain a HARQ process identifier for the current resource.

When the semi-static resource configuration information carries the identifier offset, the identifier offset needs to be considered when the HARQ process identifier for each resource in the semi-static resource is determined. Therefore, after the fourth value is obtained based on the preset flag value and the preset increment, the value obtained by performing the modulo operation on the fourth value and the preset number of HARQ processes, and the identifier offset need to be added, to obtain the HARQ process identifier for the current resource. In this way, offset of the HARQ process identifier for the current resource in the semi-static resource relative to the HARQ process identifier for the another resource is implemented, thereby avoiding a conflict between the HARQ process identifier for the semi-static resource and the HARQ process identifier of the another resource.

In Manner B, fourth values obtained based on the preset flag value and the preset increment tend to increase, so that HARQ process identifiers for resources that are obtained by adding values obtained by performing modulo operations on the fourth values and the preset number of HARQ processes, and the identifier offset are 0+F, 1+F, ..., and Y-1+F. The HARQ process identifiers for the resources in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined. It should be noted that when the HARQ process identifiers for the resources in the semi-static resource cycle continuously from 0 to Y-1, one cycle starts from a HARQ process identifier for the 1st resource in the semi-static resource, and ends at the HARQ process identifier for the 1st resource in the semi-static resource minus 1. The HARQ process identifier for the 1st resource in the semi-static resource may be any one of 0+F, 1+F, ..., and Y-1+F.

In Manner B, the semi-static resource is directly used as a whole, and the HARQ process identifier for the current resource is directly determined based on the preset flag value, the preset increment, the preset number of HARQ processes, and the identifier offset. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

Manner C: Obtain a specified HARQ process identifier. For a target resource other than the 1st resource in the semi-static resource, add the specified HARQ process identifier, the preset flag value, and at least one preset increment to obtain a fifth value, and perform a modulo operation on the fifth value and a preset number of HARQ processes to obtain a HARQ process identifier for the target resource.

The specified HARQ process identifier is a HARQ process identifier for the 1st resource in the semi-static resource.

If the semi-static resource configuration information does not carry the identifier offset, the specified HARQ process identifier may be an integer greater than or equal to 0 and less than the preset number of HARQ processes. In other words, the specified HARQ process identifier may be any one of 0, 1, ..., and Y-1, where Y is the preset number of HARQ processes.

If the semi-static resource configuration information carries the identifier offset, the specified HARQ process identifier may be an integer greater than or equal to F and less than the preset number of HARQ processes plus F. In other words, the specified HARQ process identifier may be any one of 0+F, 1+F, ..., and Y-1+F, where Y is the preset number of HARQ processes, and F is the identifier offset.

The preset increment may be preset. In this embodiment of this application, for each resource in the semi-static resource, when a fifth value is calculated, a number of preset increments to be accumulated to the specified HARQ process identifier and the preset flag value may be different. For example, for the 2nd resource in the semi-static resource, when a HARQ process identifier for the 2nd resource is determined, the specified HARQ process identifier, the preset flag value, and one preset increment may be accumulated to obtain a fifth value. For the 3rd resource in the semi-static resource, when a HARQ process identifier for the 3rd resource is determined, the specified HARQ process identifier, the preset flag value, and two preset increments may be accumulated to obtain a fifth value. For a 4th resource in the semi-static resource, when a HARQ process identifier for the 4th resource is determined, the specified HARQ process identifier, the preset flag value, and three preset increments may be accumulated to obtain a fifth value. The rest is deduced by analogy. For resources in the semi-static resource, fifth values obtained by accumulating the specified HARQ process identifier, the preset flag value, and the at least one preset increment increase.

In Manner C, the fifth values obtained based on the specified HARQ process identifier, the preset flag value, and the preset increment tend to increase, so that HARQ process identifiers for the resources that are obtained by performing modulo operations on the fifth values and the preset number of HARQ processes are 0, 1, ..., and Y-1. The HARQ process identifiers for the resources in the semi-static resource cycle continuously from 0 to Y-1, where Y is the preset number of HARQ processes. In this way, identifiers of Y HARQ processes associated with the semi-static resource may be determined, that is, the Y HARQ processes configured for a service using the semi-static resource are determined. It should be noted that when the HARQ process identifiers for the resources in the semi-static resource cycle continuously from 0 to Y-1, one cycle starts from the specified HARQ process identifier, and ends at the specified HARQ process identifier minus 1.

In Manner C, the semi-static resource is directly used as a whole, and the HARQ process identifier for the target resource is directly determined based on the specified HARQ process identifier, the preset flag value, the preset increment, and the preset number of HARQ processes. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

Manner D: If the semi-static resource configuration information carries the identifier offset, obtain a specified HARQ process identifier. For a target resource other than the 1st resource in the semi-static resource, add the specified HARQ process identifier, the preset flag value, and at least one preset increment to obtain a fifth value, and add a value obtained by performing a modulo operation on the fifth value and a preset number of HARQ processes, and the identifier offset, to obtain a HARQ process identifier for the target resource.

When the semi-static resource configuration information carries the identifier offset, the terminal needs to consider the identifier offset when determining the HARQ process identifier for each resource in the semi-static resource. Therefore, after the fifth value is obtained based on the specified HARQ process identifier, the preset flag value, and the preset increment, the value obtained by performing the modulo operation on the fifth value and the preset number of HARQ processes, and the identifier offset need to be added, to obtain the HARQ process identifier for the target resource. In this way, offset of the HARQ process identifier for the target resource in the semi-static resource relative to the HARQ process identifier for the another resource is implemented, thereby avoiding a conflict between the HARQ process identifier for the semi-static resource and the HARQ process identifier of the another resource.

In Manner D, fifth values obtained based on the specified HARQ process identifier, the preset flag value, and the preset increment tend to increase, so that HARQ process identifiers for the resources that are obtained by adding values obtained by performing modulo operations on the fifth values and the preset number of HARQ processes, and the identifier offset are 0+F, 1+F, ..., and Y-1+F. The HARQ process identifiers for the resources in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined. It should be noted that when the HARQ process identifiers for the resources in the semi-static resource cycle continuously from 0 to Y-1, one cycle starts from the specified HARQ process identifier, and ends at the specified HARQ process identifier minus 1.

In Manner D, the semi-static resource is directly used as a whole, and the HARQ process identifier for the target resource is directly determined based on the specified HARQ process identifier, the preset flag value, the preset increment, the preset number of HARQ processes, and the identifier offset. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

If the target flag value is associated with each resource in the semi-static resource, for example, the target flag value may include a flag value of each resource in the semi-static resource.

For example, flag values of all resources in the semi-static resource may sequentially increase by a preset increasing amount.

The preset increasing amount is a positive integer. The preset increasing amount may be a preset constant value. The preset increasing amount is not an integer multiple of a preset number of HARQ process identifiers. For example, the preset increasing amount may be configured and notified to the terminal by the base station, or may be defined in the related communication protocol used by the terminal and the base station, or certainly, may be preset in another form. This is not limited in this application.

In a first example, the flag value of each resource in the semi-static resource may be preset, and may be set by a technical person based on an actual requirement. For example, the preset increasing amount is 2. A flag value of the $1^{st}$ resource in the semi-static resource may be 2, a flag value of the $2^{nd}$ resource may be 4, a flag value of the $3^{rd}$ resource may be 6, and so on.

In a second example, the flag value of each resource in the semi-static resource is a first index. The first index is a first resource index. Alternatively, the first index is a value obtained by subtracting 1 from a first resource index. Alternatively, the first index is a value obtained by adding 1 to a first resource index.

In this case, if it is defined that the flag values of all the resources in the semi-static resource sequentially increase by the preset increasing amount, the preset increasing amount is 1.

In this manner, the flag value of each resource in the semi-static resource is determined based on the first resource index of the resource. Therefore, a determining process is simple, helping improve efficiency of determining the HARQ process identifier for each resource in the semi-static resource.

For any resource in the semi-static resource, a first resource index of the resource indicates the resource in all the resources in the semi-static resource. In other words, the first resource index is a resource index in the semi-static resource. For example, a first resource index of the $1^{st}$ resource in the semi-static resource is 1, a first resource index of the $2^{nd}$ resource in the semi-static resource is 2, and a first resource index of the $3^{rd}$ resource in the semi-static resource is 3. Alternatively, a first resource index of the $1^{st}$ resource in the semi-static resource is 0, a first resource index of the $2^{nd}$ resource in the semi-static resource is 1, and a first resource index of the $3^{rd}$ resource in the semi-static resource is 2.

It should be noted that indexes usually start from 0 or 1, and increase by using 1 as an increasing amount. In this application, if the first resource index is specified to start from 0, and the first index is also specified to start from 0, the first index may be the first resource index. If the first resource index is specified to start from 0, and the first index is specified to start from 1, the first index may be the value obtained by adding 1 to the first resource index. If the first resource index is specified to start from 1, and the first index is specified to start from 0, the first index may be the value obtained by subtracting 1 from the first resource index. If the first resource index is specified to start from 1, and the first index is also specified to start from 1, the first index may be the first resource index.

In a third example, the flag value of each resource in the semi-static resource is a value obtained by multiplying a third index by M and then adding a second index. In other words, the flag value of the resource = the second index of the resource + a number of sets * the third index of the resource. M is the number of sets of the plurality of sets of resources in the semi-static resource.

In this case, if it is defined that the flag values of all the resources in the semi-static resource sequentially increase by the preset increasing amount, the preset increasing amount is 1.

In this manner, the flag value of each resource in the semi-static resource is determined based on a second resource index and a third resource index of the resource. Therefore, a determining process is simple, helping improve efficiency of determining the HARQ process identifier for each resource in the semi-static resource.

The second index is the second resource index. Alternatively, the second index is a value obtained by subtracting 1 from the second resource index. Alternatively, the second index is a value obtained by adding 1 to the second resource index.

For any resource in the semi-static resource, a second resource index of the resource indicates, in the plurality of sets of resources in the semi-static resource, a set of resources to which the resource belongs. In other words, the second resource indexes are resource indexes of the plurality of sets of resources. For example, a second resource index of the 1st set of resources in the semi-static resource is 1 (that is, second resource indexes of all resources in the 1st set of resources are 1), a second resource index of the 2nd set of resources in the semi-static resource is 2 (that is, second resource indexes of all resources in the 2nd set of resources are 2), and a second resource index of the 3rd set of resources in the semi-static resource is 3 (that is, second resource indexes of all resources in the 3rd set of resources are 3). Alternatively, a second resource index of the 1st set of resources in the semi-static resource is 0 (that is, second resource indexes of all resources in the 1st set of resources are 0), a second resource index of the 2nd set of resources in the semi-static resource is 1 (that is, second resource indexes of all resources in the 2nd set of resources are 1), and a second resource index of the 3rd set of resources in the semi-static resource is 2 (that is, second resource indexes of all resources in the 3rd set of resources are 2).

It should be noted that indexes usually start from 0 or 1, and increase by using 1 as an increasing amount. In this application, if the second resource index is specified to start from 0, and the second index is also specified to start from 0, the second index may be the second resource index. If the second resource index is specified to start from 0, and the second index is specified to start from 1, the second index may be the value obtained by adding 1 to the second resource index. If the second resource index is specified to start from 1, and the second index is specified to start from 0, the second index may be the value obtained by subtracting 1 from the second resource index. If the second resource index is specified to start from 1, and the second index is also specified to start from 1, the second index may be the second resource index.

The third index is the third resource index. Alternatively, the third index is a value obtained by subtracting 1 from the third resource index. Alternatively, the third index is a value obtained by adding 1 to the third resource index.

For any resource in the semi-static resource, a third resource index of the resource indicates the resource in a plurality of resources in a set of resources to which the resource belongs. In other words, the third resource index is a resource index in each set of resources. For example, for any set of resources in the semi-static resource, a third resource index of a 1st resource in the set of resources is 1, a third resource index of a 2nd resource in the set of resources is 2, and a third resource index of a 3rd resource in the set of resources is 3. Alternatively, a third resource index of a 1st resource in the set of resources is 0, a third resource index of a 2nd resource in the set of resources is 1, and a third resource index of a 3rd resource in the set of resources is 2.

It should be noted that indexes usually start from 0 or 1, and increase by using 1 as an increasing amount. In this application, if the third resource index is specified to start from 0, and the third index is also specified to start from 0, the third index may be the third resource index. If the third resource index is specified to start from 0, and the third index is specified to start from 1, the third index may be the value obtained by adding 1 to the third resource index. If the third resource index is specified to start from 1, and the third index is specified to start from 0, the third index may be the value obtained by subtracting 1 from the third resource index. If the third resource index is specified to start from 1, and the third index is also specified to start from 1, the third index may be the third resource index.

Optionally, when the target flag value includes the flag value of each resource in the semi-static resource, and the flag values of all the resources in the semi-static resource sequentially increase by the preset increasing amount, the operation of determining the HARQ process identifier for each resource in the semi-static resource based on the target flag value may be implemented in the following Manner 1, Manner 2, or Manner 3.

Manner 1: For a current resource in the semi-static resource, perform a modulo operation on a flag value of the current resource and a preset number of HARQ processes to obtain a HARQ process identifier for the current resource.

The current resource is a current slot or a current symbol. If the semi-static resource occurs in the slot, the current resource is the current slot; or if the semi-static resource occurs at the symbol, the current resource is the current symbol.

Because the flag values of all the resources in the semi-static resource sequentially increase by the preset increasing amount, HARQ process identifiers for the resources that are obtained by performing modulo operations on flag values of the current resources and the preset number of HARQ processes are 0, 1, ..., and Y-1. The HARQ process identifiers for the resources in the semi-static resource cycle continuously from 0 to Y-1, where Y is the preset number of HARQ processes. In this way, identifiers of Y HARQ processes associated with the semi-static resource may be determined, that is, the Y HARQ processes configured for a service using the semi-static resource are determined.

In Manner 1, the semi-static resource is directly used as a whole, and the HARQ process identifier for the current resource is directly determined based on the flag value of the current resource and the preset number of HARQ processes. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

Manner 2: If the semi-static resource configuration information carries the identifier offset, for a current resource in the semi-static resource, add a value obtained by performing a modulo operation on a flag value of the current resource and a preset number of HARQ processes, and the identifier offset, to obtain a HARQ process identifier for the current resource.

When the semi-static resource configuration information carries the identifier offset, the identifier offset needs to be considered when the HARQ process identifier for each resource in the semi-static resource is determined. Therefore, after the modulo operation is performed on the flag value of the current resource and the preset number of HARQ processes, the value obtained through the modulo operation and the identifier offset need to be added, to obtain the HARQ process identifier for the current resource. In this way, offset of the HARQ process identifier for the current resource in the semi-static resource relative to the HARQ process identifier for the another resource is implemented, thereby avoiding a conflict between the HARQ process identifier for the semi-static resource and the HARQ process identifier of the another resource.

Because the flag values of all the resources in the semi-static resource sequentially increase by the preset increasing amount, HARQ process identifiers for the resources that are obtained by adding values obtained by performing modulo operations on flag values of the current resources and the preset number of HARQ processes, and the identifier offset are 0+F, 1+F, ..., and Y-1+F. The HARQ process identifiers for the resources in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined.

In Manner 2, the semi-static resource is directly used as a whole, and the HARQ process identifier for the current resource is determined based on the flag value of the current resource, the preset number of HARQ processes, and the identifier offset. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

Manner 3: Obtain a specified HARQ process identifier. For a target resource other than the 1st resource in the semi-static resource, determine a HARQ process identifier for the target resource based on the specified HARQ process identifier and a flag value of the target resource.

In Manner 3, the semi-static resource is directly used as a whole, and the HARQ process identifier for the target resource is determined based on the specified HARQ process identifier and the flag value of the target resource. In this way, after the specified HARQ process identifier is obtained, a HARQ process identifier for a target resource in each of the plurality of sets of resources in the semi-static resource is determined in a unified determining manner by using the specified HARQ process identifier as a starting point, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

The operation of determining the HARQ process identifier for the target resource based on the specified HARQ process identifier and the flag value of the target resource may include the following Manner (1) or Manner (2).

Manner (1): Add the specified HARQ process identifier and the flag value of the target resource to obtain a sixth value, and perform a modulo operation on the sixth value and a preset number of HARQ processes to obtain the HARQ process identifier for the target resource.

In Manner (1), because the flag values of all the resources in the semi-static resource sequentially increase by the preset increasing amount, sixth values obtained based on the specified HARQ process identifiers and flag values of the target resources tend to increase. Therefore, HARQ process identifiers for the target resources that are obtained by performing modulo operations on the sixth values and the preset number of HARQ processes are 0, 1, ..., and Y-1. In this way, the HARQ process identifiers for the resources in the semi-static resource cycle continuously from 0 to Y-1, where Y is the preset number of HARQ processes. In this way, identifiers of Y HARQ processes associated with the semi-static resource may be determined, that is, the Y HARQ processes configured for a service using the semi-static resource are determined.

It should be noted that in Manner (1), when the HARQ process identifiers for the resources in the semi-static resource cycle continuously from 0 to Y-1, one cycle starts from the specified HARQ process identifier, and ends at the specified HARQ process identifier minus 1.

Manner (2): If the semi-static resource configuration information carries the identifier offset, add the specified HARQ process identifier and the flag value of the target resource to obtain a sixth value, and add a value obtained by performing a modulo operation on the sixth value and a preset number of HARQ processes, and the identifier offset, to obtain the HARQ process identifier for the target resource.

When the semi-static resource configuration information carries the identifier offset, the identifier offset needs to be considered when the HARQ process identifier for the target resource in the semi-static resource is determined. Therefore, after the sixth value is obtained based on the specified HARQ process identifier and the flag value of the target resource, the value obtained by performing the modulo operation on the sixth value and the preset number of HARQ processes, and the identifier offset need to be added, to obtain the HARQ process identifier for the target resource. In this way, offset of the HARQ process identifier for the target resource in the semi-static resource relative to the HARQ process identifier for the another resource is implemented, thereby avoiding a conflict between the HARQ process identifier for the semi-static resource and the HARQ process identifier of the another resource.

In Manner (2), because the flag values of all the resources in the semi-static resource sequentially increase by the preset increasing amount, sixth values obtained based on the specified HARQ process identifiers and flag values of the target resources tend to increase. Therefore, HARQ process identifiers for the target resources that are obtained by adding values obtained by performing modulo operations on the sixth values and the preset number of HARQ processes, and the identifier offset are 0+F, 1+F, ..., and Y-1+F. In this way, the HARQ process identifiers for the resources in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined.

It should be noted that in Manner (2), when the HARQ process identifiers for the resources in the semi-static resource cycle continuously from 0+F to Y-1+F, one cycle starts from the specified HARQ process identifier, and ends at the specified HARQ process identifier minus 1.

The following describes several obtaining manners for the specified HARQ process identifier.

In a first example, the terminal may receive indication information, where the indication information may carry the specified HARQ process identifier.

The indication information may be sent by the base station to the terminal, and indicates the HARQ process identifier for the 1st resource in the semi-static resource. For example, the indication information may be RRC information, MAC CE information, or DCI. Certainly, the indication information may alternatively be another type of information, provided that the indication information can indicate the HARQ process identifier for the 1st resource in the semi-static resource. This is not limited in this application.

In a second example, the specified HARQ process identifier may be a preset identifier.

The preset identifier may be a preset constant value. For example, the preset identifier may be configured and notified to the terminal by the base station, or may be defined in the related communication protocol used by the terminal and the base station, or certainly, may be preset in another form. This is not limited in this application.

In a third example, if the semi-static resource occurs in the slot, for a 1st slot in the semi-static resource, the 1st slot is divided by the target time domain interval to obtain a seventh value, or the 1st slot is divided by a scheduling cycle of a set of resources in which the 1st slot is located, to obtain a seventh value. A round-down operation is performed on a value obtained by multiplying the seventh value by an adjustment factor, to obtain an eighth value. A modulo operation is performed on the eighth value and the preset number of HARQ processes to obtain a HARQ process identifier for the 1st slot.

Optionally, the 1st slot = a number of slots per frame * an SFN + a slot number of the 1st slot in a frame.

The adjustment factor may be preset. For example, the adjustment factor may be a value obtained by dividing a number of subframes per frame in the semi-static resource by the number of slots per frame in the semi-static resource. Certainly, the adjustment factor may alternatively be another value set based on an actual requirement. This is not limited in this embodiment of this application.

Optionally, the third example may be implemented by using the following programming language formula:

$$\text{HARQ Process ID} = [\text{floor} (\text{CURRENT\_slot} \times Z / p)] \text{ modulo nrofHARQ-Processes}$$

HARQ Process ID is the HARQ process identifier for the 1st slot. CURRENT_slot is the 1st slot. p is the target time domain interval or the scheduling cycle of the set of resources in which the 1st slot is located. Z is the adjustment factor. nrofHARQ-Processes is the preset number of HARQ processes. floor is a round-down function. modulo is a modulo function.

In a fourth example, if the semi-static resource configuration information carries the identifier offset, and the semi-static resource occurs in the slot, for a 1st slot in the semi-static resource, the 1st slot is divided by the target time domain interval to obtain a seventh value, or the 1st slot is divided by a scheduling cycle of a set of resources in which the 1st slot is located, to obtain a seventh value. A round-down operation is performed on a value obtained by multiplying the seventh value by an adjustment factor, to obtain an eighth value. A value obtained by performing a modulo operation on the eighth value and the preset number of HARQ processes, and the identifier offset are added, to obtain a HARQ process identifier for the 1st slot.

Optionally, the fourth example may be implemented by using the following programming language formula:

HARQ Process ID = [floor (CURRENT_slot $\times$ Z / p)] modulo nrofHARQ-Processes + harq-ProcID-Offset

HARQ Process ID is the HARQ process identifier for the 1st slot. CURRENT_slot is the 1st slot. p is the target time domain interval or the scheduling cycle of the set of resources in which the 1st slot is located. Z is the adjustment factor. nrofHARQ-Processes is the preset number of HARQ processes. harq-ProcID-Offset is the identifier offset. floor is a round-down function. modulo is a modulo function.

When the semi-static resource configuration information carries the identifier offset, the identifier offset needs to be considered when the HARQ process identifier for the 1st resource in the semi-static resource is determined. Therefore, after the eighth value is obtained based on the 1st slot and the target time domain interval or the scheduling cycle of the set of resources in which the 1st slot is located, the value obtained by performing the modulo operation on the eighth value and the preset number of HARQ processes, and the identifier offset need to be added, to obtain the HARQ process identifier for the 1st slot. In this way, offset of the HARQ process identifier for the 1st slot in the semi-static resource relative to the HARQ process identifier for the another resource is implemented, thereby avoiding a conflict between the HARQ process identifier for the semi-static resource and the HARQ process identifier of the another resource.

In a fifth example, if the semi-static resource occurs at the symbol, for a 1st symbol in the semi-static resource, a round-down operation is performed on a value obtained by dividing the 1st symbol by the target time domain interval, to obtain a ninth value, or a round-down operation is performed on a value obtained by dividing the 1st symbol by a scheduling cycle of a set of resources in which the 1st symbol is located, to obtain a ninth value. A modulo operation is performed on the ninth value and the preset number of HARQ processes to obtain a HARQ process identifier for the 1st symbol.

Optionally, the 1st symbol = a number of slots per frame * a number of symbols per slot * an SFN + a slot number of a slot to which the 1st symbol belongs in a frame * a number of slots per frame + a symbol number of the 1st symbol in the slot.

Optionally, the fifth example may be implemented by using the following programming language formula:

HARQ Process ID = [floor(FIRST_symbol / p)] modulo nrofHARQ- Processes

HARQ Process ID is the HARQ process identifier for the 1st symbol. FIRST_symbol is the 1st symbol. p is the target time domain interval or the scheduling cycle of the set of resources in which the 1st symbol is located. nrofHARQ-Processes is the preset number of HARQ processes. floor is a round-down function. modulo is a modulo function.

In a sixth example, if the semi-static resource configuration information carries the identifier offset, and the semi-static resource occurs at the symbol, for a 1st symbol in the semi-static resource, a round-down operation is performed on a value obtained by dividing the 1st symbol by the target time domain interval, to obtain a ninth value, or a round-down operation is performed on a value obtained by dividing the 1st symbol by a scheduling cycle of a set of resources in which the 1st symbol is located, to obtain a ninth value. A value obtained by performing a modulo operation on the ninth value and the preset number of HARQ processes, and the identifier offset are added, to obtain a HARQ process identifier for the 1st symbol.

Optionally, the sixth example may be implemented by using the following programming language formula:

HARQ Process ID = [floor(CURRENT_symbol / p)] modulo nrofHARQ-Processes + harq-ProcID-Offset

HARQ Process ID is the HARQ process identifier for the 1st symbol. CURRENT_symbol is the 1st symbol. p is the target time domain interval or the scheduling cycle of the set of resources in which the 1st symbol is located. nrofHARQ-Processes is the preset number of HARQ processes. harq-ProcID-Offset is the identifier offset. floor is a round-down function. modulo is a modulo function.

When the semi-static resource configuration information carries the identifier offset, the identifier offset needs to be considered when the HARQ process identifier for the 1st resource in the semi-static resource is determined. Therefore, after the ninth value is obtained based on the 1st symbol and the target time domain interval or the scheduling cycle of the set of resources in which the 1st symbol is located, the value obtained by performing the modulo operation on the ninth value and the preset number of HARQ processes, and the identifier offset need to be added, to obtain the HARQ process identifier for the 1st symbol. In this way, offset of the HARQ process identifier for the 1st symbol in the semi-static resource relative to the HARQ process identifier for the another resource is implemented, thereby avoiding a conflict between the HARQ process identifier for the semi-static resource and the HARQ process identifier of the another resource.

According to a second aspect, a HARQ process identifier determining apparatus is provided. The HARQ process identifier determining apparatus has a function of implementing a behavior of the HARQ process identifier determining method in the first aspect. The HARQ process identifier determining apparatus includes at least one module, and the at least one module is configured to implement the HARQ process identifier determining method according to the first aspect.

According to a third aspect, a HARQ process identifier determining apparatus is provided. A structure of the HARQ process identifier determining apparatus includes a processor and a memory. The memory is configured to store a program supporting the HARQ process identifier determining apparatus in performing the HARQ process identifier determining method according to the first aspect, and store related data used to implement the HARQ process identifier determining method according to the first aspect. The processor is configured to execute the program stored in the memory. The HARQ process identifier determining apparatus may further include a communication bus, and the communication bus is configured to establish a connection between the processor and the memory.

According to a fourth aspect, a chip system is provided. The chip system includes a processor. The processor is coupled to a memory. The processor executes a computer program stored in the memory, to implement the HARQ process identifier determining method according to the first aspect.

According to a fifth aspect, a computer-readable storage medium is provided. The computer-readable storage medium stores instructions. When the instructions are run on a computer, the computer is enabled to perform the HARQ process identifier determining method according to the first aspect.

According to a sixth aspect, a computer program product including instructions is provided. When the instructions are run on a computer, the computer is enabled to perform the HARQ process identifier determining method according to the first aspect.

Technical effects achieved in the second aspect, the third aspect, the fourth aspect, the fifth aspect, and the sixth aspect are similar to technical effects achieved by corresponding technical means in the first aspect. Details are not described herein again.

According to a seventh aspect, a HARQ process identifier determining method is provided. In the method, HARQ process identifier configuration information is sent, where the HARQ process identifier configuration information includes a determining rule for a target time domain interval between adjacent resources in a semi-static resource, or the HARQ process identifier configuration information includes a target flag value, the target time domain interval or the target flag value is used to determine a hybrid automatic repeat request HARQ process identifier for each resource in the semi-static resource, and the target flag value is associated with each resource in the semi-static resource, or the target flag value is a preset flag value.

The HARQ process identifier configuration information indicates to configure a HARQ process identifier for the semi-static resource. The semi-static resource may include a plurality of sets of resources. For example, the HARQ process identifier configuration information may be RRC information, MAC CE information, or DCI. Certainly, the HARQ process identifier configuration information may alternatively be another type of information, provided that the HARQ process identifier for the semi-static resource can be configured by using the HARQ process identifier configuration information. This is not limited in this application.

The HARQ process identifier configuration information may include the determining rule for the target time domain interval. The determining rule indicates a manner of determining the target time domain interval. For example, the determining rule indicates whether to use an average value of time domain intervals between adjacent resources in the semi-static resource as the target time domain interval, use a maximum value of time domain intervals between adjacent resources in the semi-static resource as the target time domain interval, or use a minimum value of time domain intervals between adjacent resources in the semi-static resource as the target time domain interval. In other words, the determining rule is using the average value, the maximum value, or the minimum value of the time domain intervals between the adjacent resources in the semi-static resource as the target time domain interval. A device receiving the HARQ process identifier configuration information may determine the target time domain interval according to the determining rule and based on time domain intervals between the adjacent resources in the semi-static resource.

In this application, the HARQ process identifier configuration information is sent, where the HARQ process identifier configuration information includes the determining rule of the target time domain interval between the adjacent resources in the semi-static resource, or the HARQ process identifier configuration information includes the target flag value, and the semi-static resource includes the plurality of sets of resources. For each resource in each of the plurality of sets of resources in the semi-static resource, a HARQ process identifier may be determined based on the determined target time domain interval, or a HARQ process identifier may be determined based on the target flag value. In this way, HARQ process identifiers for all resources in the semi-static resource are determined in a unified determining manner by using the plurality of sets of resources in the semi-static resource as a whole. Because an independent identifier offset does not need to be introduced to determine a HARQ process identifier for each set of resources in the semi-static resource, not only complexity in determining the HARQ process identifier is reduced, but also efficiency of determining the HARQ process identifier is improved. In addition, a number of HARQ processes required by the semi-static resource can be effectively reduced, so that system capacity can be improved.

Optionally, the target flag value is a preset flag value, the HARQ process identifier configuration information includes a preset increment, and the preset flag value and the preset increment are used to determine the HARQ process identifier for each resource in the semi-static resource.

Optionally, the target flag value is a preset flag value, and the HARQ process identifier configuration information includes a preset increment. The method further includes: sending a specified HARQ process identifier, where the specified HARQ process identifier is a HARQ process identifier for a 1st resource in the semi-static resource, the specified HARQ process identifier, the preset flag value, and the preset increment are used to determine a HARQ process identifier for a target resource, and the target resource is another resource other than the 1st resource in the semi-static resource.

Optionally, the target flag value is associated with each resource in the semi-static resource, and the target flag value includes a flag value of each resource in the semi-static resource.

The flag value of each resource in the semi-static resource is a first index, the first index is a first resource index, or the first index is a value obtained by subtracting 1 from a first resource index, or the first index is a value obtained by adding 1 to a first resource index, and a first resource index of any resource in the semi-static resource indicates the resource in all resources in the semi-static resource. Alternatively, the tag value of each resource in the semi-static resource is a value obtained by multiplying a third index by M and then adding a second index, the second index is a second resource index, or the second index is a value obtained by subtracting 1 from a second resource index, or the second index is a value obtained by adding 1 to a second resource index, a second resource index of any resource in the semi-static resource indicates, in the plurality of sets of resources, a set of resources to which the resource belongs, the third index is a third resource index, or the third index is a value obtained by subtracting 1 from a third resource index, or the third index is a value obtained by adding 1 to a third resource index, a third resource index of the resource indicates the resource in a plurality of resources in the set of resources to which the resource belongs, and M is a number of the plurality of sets of resources.

Optionally, the method further includes: sending a specified HARQ process identifier, where the specified HARQ process identifier is a HARQ process identifier for a 1st resource in the semi-static resource, the specified HARQ process identifier and a flag value of a target resource are used to determine a HARQ process identifier for the target resource, and the target resource is another resource other than the 1st resource in the semi-static resource.

Optionally, the specified HARQ process identifier is carried in indication information, and the indication information is RRC information, MAC CE information, or DCI.

Optionally, the HARQ process identifier configuration information carries an identifier offset. The identifier offset is an offset between a HARQ process identifier for the semi-static resource and a HARQ process identifier for another resource. The target time domain interval and the identifier offset are used to determine the HARQ process identifier for each resource in the semi-static resource. Alternatively, the target flag value and the identifier offset are used to determine the HARQ process identifier for each resource in the semi-static resource.

According to an eighth aspect, a HARQ process identifier determining apparatus is provided. The HARQ process identifier determining apparatus has a function of implementing a behavior of the HARQ process identifier determining method in the seventh aspect. The HARQ process identifier determining apparatus includes at least one module, and the at least one module is configured to implement the HARQ process identifier determining method according to the seventh aspect.

According to a ninth aspect, a HARQ process identifier determining apparatus is provided. A structure of the HARQ process identifier determining apparatus includes a processor and a memory. The memory is configured to store a program supporting the HARQ process identifier determining apparatus in performing the HARQ process identifier determining method according to the seventh aspect, and store related data used to implement the HARQ process identifier determining method according to the seventh aspect. The processor is configured to execute the program stored in the memory. The HARQ process identifier determining apparatus may further include a communication bus, and the communication bus is configured to establish a connection between the processor and the memory.

According to a tenth aspect, a chip system is provided. The chip system includes a processor. The processor is coupled to a memory. The processor executes a computer program stored in the memory, to implement the HARQ process identifier determining method according to the seventh aspect.

According to an eleventh aspect, a computer-readable storage medium is provided. The computer-readable storage medium stores instructions. When the instructions are run on a computer, the computer is enabled to perform the HARQ process identifier determining method according to the seventh aspect.

According to a twelfth aspect, a computer program product including instructions is provided. When the instructions are run on a computer, the computer is enabled to perform the HARQ process identifier determining method according to the seventh aspect.

Technical effects achieved in the eighth aspect, the ninth aspect, the tenth aspect, the eleventh aspect, and the twelfth aspect are similar to technical effects achieved by corresponding technical means in the seventh aspect. Details are not described herein again.

BRIEF DESCRIPTION OF DRAWINGS

FIG. 1 is a diagram of a plurality of sets of resources according to an embodiment of this application;

FIG. 2 is a diagram of a HARQ process identifiers for a plurality of sets of resources according to an embodiment of this application;

FIG. 3 is a diagram of a communication system according to an embodiment of this application;

FIG. 4 is a diagram of a structure of a computer device according to an embodiment of this application;

FIG. 5 is a diagram of a structure of another computer device according to an embodiment of this application;

FIG. 6 is a flowchart of a HARQ process identifier determining method according to an embodiment of this application;

FIG. 7 is a diagram of a time domain interval between adjacent resources in a semi-static resource according to an embodiment of this application;

FIG. 8 is another diagram of HARQ process identifiers for a plurality of sets of resources according to an embodiment of this application;

FIG. 9 is a diagram of a structure of a HARQ process identifier determining apparatus according to an embodiment of this application; and

FIG. 10 is a diagram of a structure of another HARQ process identifier determining apparatus according to an embodiment of this application.

## DESCRIPTION OF EMBODIMENTS

To make the objectives, technical solutions, and advantages of this application clearer, the following further describes implementations of this application in detail with reference to the accompanying drawings.

It should be understood that "a plurality of" mentioned in this application means two or more. In the descriptions of this application, "/" represents dividing unless otherwise specified. For example, 1/2 may represent dividing 1 by 2. In particular, in this specification, "and/or" is used to describe an association relationship between associated objects and represents that three relationships may exist. For example, A and/or B may represent the following three cases: Only A exists, both A and B exist, and only B exists. In addition, to clearly describe the technical solutions of this application, words such as "first" and "second" are used to distinguish between same items or similar items with basically the same functions and effects. A person skilled in the art may understand that the words such as "first" and "second" do not limit a number or an execution sequence, and the words such as "first" and "second" do not indicate a definite difference.

Statements such as "one embodiment" or "some embodiments" described in this application mean that a specific characteristic, structure or feature described in this embodiment is included in one or more embodiments of this application. Therefore, statements "in one embodiment", "in some embodiments", "in some other embodiments", "in other embodiments", and the like in different places in this application do not necessarily refer to the same embodiment, but mean that "one or more but not all embodiments", unless otherwise specially emphasized in other ways. In addition, the terms "include", "comprise", and "have", and their variations mean "including but not limited to", unless otherwise specially emphasized in other ways.

Before embodiments of this application are described in detail, an application scenario in embodiments of this application is first described.

XR topics under the 3rd generation partnership project (3rd Generation Partnership Project, 3GPP) release 18 (Rel-18) standard mainly include research and enhancement to an XR service (XR traffic).

The XR service means integrating reality and virtuality by using a computer to create a human-computer interactive virtual environment, and is also a general term of a plurality of technologies such as AR, VR, MR, and cloud gaming. Three visual interaction technologies are fused by using a hardware device in combination with a plurality of technical means, to fuse virtual content and a real scene, bringing an experiencer "immersive" experience of seamless switching between a virtual world and a real world.

Features of the XR service mainly include a non-integer scheduling cycle, a time of arrival jitter, a variable data packet size, a multi-flow service, and the like. The multi-flow service may include different types and numbers of frames.

Currently, the non-integer scheduling cycle for the XR service includes 33.33 ms, 16.67 ms, 11.11 ms, 8.33 ms, and the like. However, there are no granularity values such as 0.33 ms and 0.11 ms in time domain of an NR system, so it is difficult to directly configure the non-integer scheduling cycle for the XR service based on time domain division of the NR system.

For example, the time domain division of the NR system may be shown in the following Table 1. It should be noted that in embodiments of this application, the time domain division of the NR system is merely described by using the following Table 1 as an example, and the following Table 1 does not constitute a limitation on embodiments of this application.

**Table 1**

| $\mu$ | $\Delta f = 2^{\mu} \cdot 15$ | frame | slot | symbol |
|---|---|---|---|---|
| 0 | 15 kHz (kilohertz) | 10 ms | 1 ms | 1*1/14 ms |
| 1 | 30 kHz | 10 ms | 1/2 ms | 1/2*1/14 ms |
| 2 | 60 kHz | 10 ms | 1/4 ms | 1/4*1/14 ms |
| 3 | 120 kHz | 10 ms | 1/8 ms | 1/8*1/14 ms |
| 4 | 240 kHz | 10 ms | 1/16 ms | 1/16*1/14 ms |
| $\mu$ | $\Delta f = 2^{\mu} \cdot 15$ | frame | slot | symbol |
| 5 | 480 kHz | 10 ms | 1/32 ms | 1/32*1/14 ms |
| 6 | 960 kHz | 10 ms | 1/64 ms | 1/64*1/14 ms |

In time domain of the NR system, wireless transmission between a terminal (which may also be referred to as user equipment (User Equipment, UE)) and a base station is organized into a frame (frame), a slot (slot), and a symbol (symbol). As shown in Table 1, the frame may has constant duration of 10 ms, and each frame may include 10 subframes. Therefore, duration of each subframe is 1 ms. Each subframe may include a plurality of slots. A number of slots included in one subframe depends on a parameter $\mu$. Each slot may include 14 symbols. In addition, as shown in Table 1, a sub-carrier spacing (Sub-Carrier Space, SCS) $\Delta f$ also depends on the parameter $\mu$.

In physical resources of the NR system, a smallest granularity in frequency domain is a subcarrier, and a smallest granularity in time domain is the symbol. A time-frequency resource including one symbol in time domain and one subcarrier in frequency domain may be referred to as a resource element (Resource Element, RE), a smallest granularity of the time-frequency resource. One resource block (Resource Block, SB) includes 14 consecutive symbols in time domain, and includes 12 consecutive subcarriers in frequency domain. In other words, one SB includes 168 REs in total.

For the XR service, a size of a data packet is constant, and a transmission time interval between data packets is also regular. Therefore, a semi-persistent scheduling mode may be used for resource scheduling for the XR service. In semi-persistent scheduling, a time-frequency resource (including uplink and downlink) of a system needs to be allocated or specified by using a physical downlink control channel (Physical Downlink Control Channel, PDCCH) only once, and then the same time-frequency resource can be periodically repeatedly used, greatly reducing PDCCH resource overheads.

Currently, a semi-persistent scheduling cycle is configured based on the time domain division shown in Table 1. However, in Table 1, there is no value of 1/3 (corresponding to 0.33 and 0.67) or 1/9 (corresponding to 0.11) for the slot. Therefore, the non-integer scheduling cycle for the XR service cannot be directly configured based on the time domain division shown in Table 1.

Therefore, a solution is provided in the related technology. Specifically, a plurality of sets of resources (which may also be referred to as semi-static resources or configured grant (Configured Grant, CG) resources) may be configured for the XR service, and time domain matching for the XR service is implemented by using a time offset (time offset) in time domain, that is, the non-integer scheduling cycle for the XR service is configured.

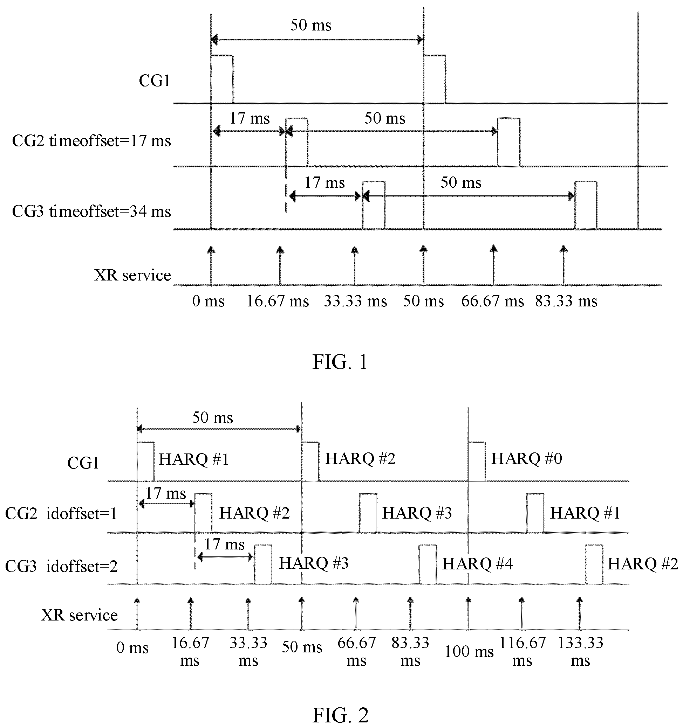

For example, it is assumed that the non-integer scheduling cycle for the XR service is 16.67 ms. As shown in FIG. 1, three sets of resources may be configured, including a CG 1 resource, a CG 2 resource, and a CG 3 resource. A scheduling cycle of each set of resources is 50 ms, but initial transmission time is different. Specifically, a time offset of the CG 2 resource relative to the CG 1 resource in time domain is 17 ms, that is, the CG 2 resource is activated 17 ms after the CG 1 resource is activated. A time offset of the CG 3 resource relative to the CG 1 resource in time domain is 34 ms, that is, the CG 3 resource is activated 34 ms after the CG 1 resource is activated. In this way, in one scheduling cycle of 50 ms, time domain intervals between resources that are adjacent in time domain in the plurality of sets of resources are 17 ms, 17 ms, and 16 ms. Therefore, the non-integer scheduling cycle 16.67 ms of the XR service can be approximately implemented by using the plurality of sets of resources.

To ensure normal transmission of data on each resource, currently, each resource is associated with a HARQ process. One HARQ process is used to perform data transmission once based on one associated resource, until acknowledgement (Acknowledgement, ACK) information or non-ACK (Non-ACK, NACK) information is received.

AHARQ process identifier (HARQ Process ID) is used to uniquely identify a HARQ process. When a resource needs to be used to transmit data, a HARQ process identifier for the resource needs to be first determined. The HARQ process identifier for the resource is an identifier of a HARQ process associated with the resource. Then, the data may be transmitted on the resource by using the HARQ process identified by the HARQ process identifier for the resource. For proper use of HARQ processes, HARQ process identifiers for resources in a set of resources typically tend to increase.

If the plurality of sets of resources are configured for the XR service, it needs to be ensured that HARQ processes associated with resources in each of the plurality of sets of resources do not conflict. In the related technology, in this case, a method for avoiding a conflict between the HARQ processes is to introduce an identifier offset (idoffset) during calculation of HARQ process identifiers. Specifically, for a 1st set of resources in the plurality of sets of resources, a HARQ process identifier for each resource in the 1st set of resources may be normally calculated. For each set of resources in another set of resources other than the 1st set of resources in the plurality of sets of resources, each set of resources has a corresponding identifier offset. When a HARQ process identifier for each resource in each set of resources is calculated, the identifier offset for each set of resources is introduced for calculation.

The related technology has two problems. On the one side, HARQ process identifiers for the plurality of sets of resources are calculated in different manners. Specifically, the HARQ process identifier may be normally calculated for the 1st set of resources, but an identifier offset needs to be introduced to calculate a HARQ process identifier for the another set of resources. In addition, a different identifier offset is introduced to calculate the HARQ process identifier for each set of resources in the another set of resources. As a result, a plurality of calculation manners need to be used when the HARQ process identifiers for the plurality of sets of resources are calculated. This may increase calculation complexity and reduce calculation efficiency, and is detrimental to data transmission. On the other side, excessive HARQ processes are configured for a same service. Specifically, because the identifier offset is introduced to calculate the HARQ process identifier for the another set of resource other than the 1st set of resources in the plurality of sets of resources, many HARQ process identifiers are finally calculated for the plurality of sets of resources. As a result, compared with a service that normally needs only one set of resources, a service that needs a plurality of sets of resources uses more additional HARQ processes. However, configuring excessive HARQ processes for the same service may cause a waste of HARQ processes, resulting in a reduction in traffic that can be supported by the system, that is, resulting in a reduction in system capacity.

For example, as shown in FIG. 2, using three HARQ processes for one set of resources can normally avoid a conflict. However, if the three sets of resources need to be configured for the XR service, a HARQ process identifier for each resource in the CG 1 resource may be normally set. The identifier offset of the CG 2 resource is 1, that is, a HARQ process identifier for each resource in the CG 2 resource needs to be offset from that for the CG 1 resource by 1 when being calculated. The identifier offset of the CG 3 resource is 2, that is, a HARQ process identifier for each resource in the CG 3 resource needs to be offset from that for the CG 1 resource by 2 when being calculated. In this case, on the one side, the HARQ process identifiers for the three sets of resources are calculated in different manners, resulting in high calculation complexity. On the other side, a conflict can be avoided by using at least five HARQ processes. Therefore, compared with a manner in which using only three HARQ processes for a set of resources can normally avoid a conflict, this manner needs at least two additional HARQ processes in the case of the plurality of sets of resources, resulting in a waste of HARQ processes.

Therefore, embodiments of this application provide a HARQ process identifier determining method, which may be applied to determining of a HARQ process identifier for a resource in a non-integer scheduling cycle. For example, for an XR service type of a non-integer scheduling cycle, HARQ process identifiers for a plurality of sets of resources configured may be determined in a unified determining manner, that is, a set of HARQ process identifiers that are consecutive in time domain may be determined for all resources in the plurality of sets of resources, to maximally reduce complexity in determining the HARQ process identifiers, improve efficiency in determining the HARQ process identifiers, and maximally reduce a number of used HARQ processes, thereby improving system capacity.

The following describes a system architecture in embodiments of this application.

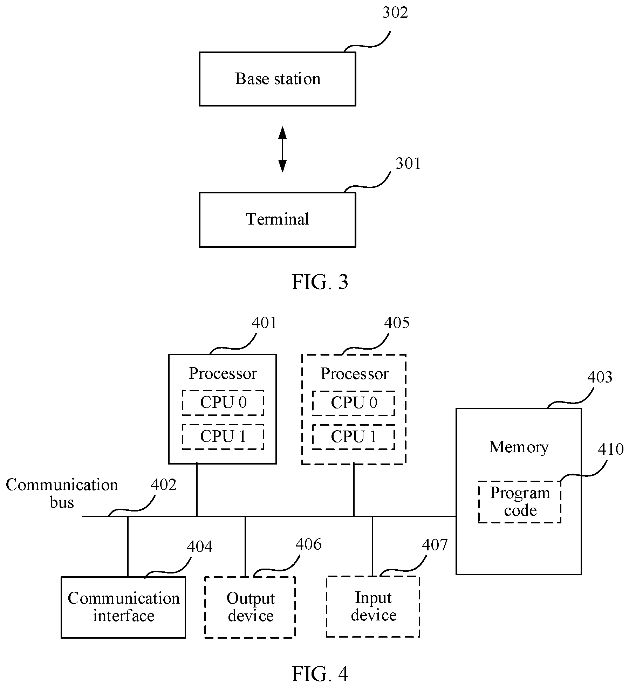

FIG. 3 is a diagram of a communication system according to an embodiment of this application. Refer to FIG. 3. The communication system includes a terminal 301 and a base station 302.

The terminal 301 may communicate with the base station 302 through a wireless connection. A service may be performed between the terminal 301 and the base station 302. The service may be a service for which a plurality of sets of resources need to be used. For example, the service may be an XR service.

In a process of performing the service, the base station 302 may send semi-static resource configuration information to the terminal 301. The semi-static resource configuration information indicates to configure a semi-static resource. The semi-static resource may include the plurality of sets of resources. Optionally, each of the plurality of sets of resources includes a plurality of resources.

After receiving the semi-static resource configuration information, for each resource in each of the plurality of sets of resources in the semi-static resource, the terminal 301 may determine a HARQ process identifier of the resource based on a target time domain interval between adjacent resources in the semi-static resource, or may determine a HARQ process identifier of the resource based on a target flag value. In this way, the terminal 301 determines HARQ process identifiers for all resources in the semi-static resource in a unified determining manner by using the plurality of sets of resources in the semi-static resource as a whole. Because an independent identifier offset does not need to be introduced to determine a HARQ process identifier for each set of resources in the semi-static resource, not only complexity in determining the HARQ process identifier is reduced, but also efficiency of determining the HARQ process identifier is improved. In addition, a number of HARQ processes required by the semi-static resource can be effectively reduced, so that system capacity can be improved.

The following describes a computer device in embodiments of this application.

FIG. 4 is a diagram of a structure of a computer device according to an embodiment of this application. The computer device may be the terminal 301 in the embodiment in FIG. 3. Refer to FIG. 4. The computer device includes at least one processor 401, a communication bus 402, a memory 403, and at least one communication interface 404.

The processor 401 may be a microprocessor (including a central processing unit (central processing unit, CPU) and the like), an application-specific integrated circuit (application-specific integrated circuit, ASIC), or one or more integrated circuits configured to control execution of a program in the solutions of this application.

The communication bus 402 may include a path for transmitting information between the foregoing components.

The memory 403 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, and the like), a magnetic disk storage medium or another magnetic storage device, or any other medium that can be used to carry or store desired program code in a form of an instruction or a data structure and that can be accessed by a computer, but is not limited thereto. The memory 403 may exist independently, and is connected to the processor 401 through the communication bus 402. The memory 403 may alternatively be integrated with the processor 401.

The communication interface 404 is configured to communicate, by using any apparatus like a transceiver, with another device or a communication network, such as an Ethernet, a radio access network (radio access network, RAN), or a wireless local area network (wireless local area network, WLAN).

During specific implementation, in an embodiment, the processor 401 may include one or more CPUs, such as a CPU 0 and a CPU 1 shown in FIG. 4.

During specific implementation, in an embodiment, the computer device may include a plurality of processors, such as a processor 401 and a processor 405 shown in FIG. 4. Each of these processors may be a single-core processor, or may be a multi-core processor. The processor herein may be one or more devices, circuits, and/or processing cores configured to process data (for example, computer program instructions).

During specific implementation, in an embodiment, the computer device may further include an output device 406 and an input device 407. The output device 406 communicates with the processor 401, and may display information in a plurality of manners. For example, the output device 406 may be a liquid crystal display (liquid crystal display, LCD), a light emitting diode (light emitting diode, LED) display device, a cathode ray tube (cathode ray tube, CRT) display device, or a projector (projector). The input device 407 communicates with the processor 401, and may receive an input from a user in a plurality of manners. For example, the input device 407 may be a mouse, a keyboard, a touchscreen device, or a sensing device.

The computer device may be a general-purpose computer device or a dedicated computer device. During specific implementation, the computer device may be a desktop computer, a portable computer, a palmtop computer, a mobile phone, a tablet computer, a wireless terminal device, or the like. A type of the computer device is not limited in this embodiment of this application.

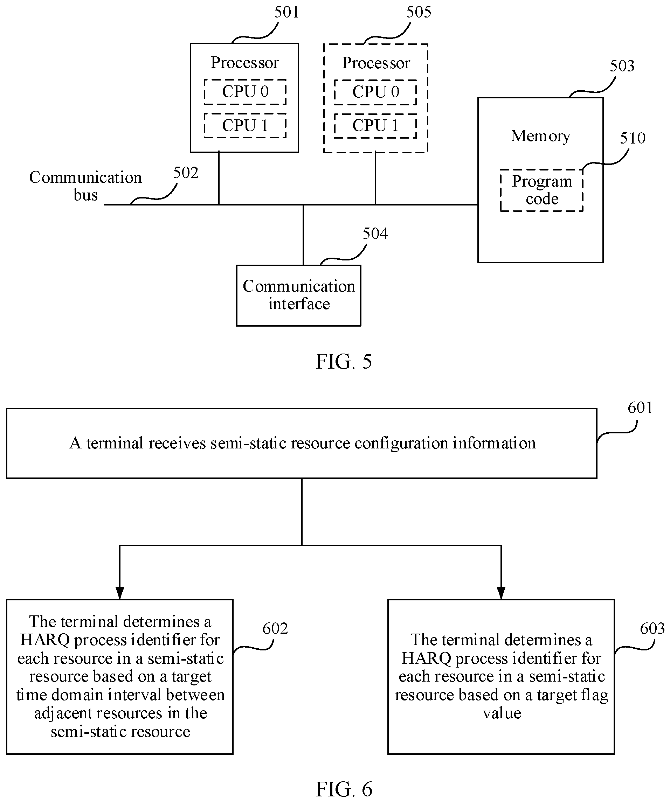

The memory 403 is configured to store program code 410 for executing the solutions of this application. The processor 401 is configured to execute the program code 410 stored in the memory 403. The computer device may implement, by using the processor 401 and the program code 410 in the memory 403, operations performed by a terminal in a HARQ process identifier determining method provided in an embodiment in FIG. 6 below.

FIG. 5 is a diagram of a structure of a computer device according to an embodiment of this application. The computer device may be the base station 302 in the embodiment in FIG. 3. Refer to FIG. 5. The computer device includes at least one processor 501, a communication bus 502, a memory 503, and at least one communication interface 504.

The processor 501 may be a microprocessor (including a CPU and the like), an ASIC, or one or more integrated circuits configured to control execution of a program in the solutions of this application.

The communication bus 502 may include a path for transmitting information between the foregoing components.

The memory 503 may be a ROM, a RAM, an EEPROM, an optical disc (including a CD-ROM, a compact disc, a laser disc, a digital versatile disc, a Blu-ray disc, and the like), a magnetic disk storage medium or another magnetic storage device, or any other medium that can be used to carry or store desired program code in a form of an instruction or a data structure and that can be accessed by a computer, but is not limited thereto. The memory 503 may exist independently, and is connected to the processor 501 through the communication bus 502. The memory 503 may alternatively be integrated with the processor 501.

The communication interface 504 is configured to communicate, by using any apparatus like a transceiver, with another device or a communication network, such as an Ethernet, a RAN, or a WLAN.

During specific implementation, in an embodiment, the processor 501 may include one or more CPUs, such as a CPU 0 and a CPU 1 shown in FIG. 5.

During specific implementation, in an embodiment, the computer device may include a plurality of processors, such as a processor 501 and a processor 505 shown in FIG. 5. Each of these processors may be a single-core processor, or may be a multi-core processor. The processor herein may be one or more devices, circuits, and/or processing cores configured to process data (for example, computer program instructions).

The memory 503 is configured to store program code 510 for executing the solutions of this application. The processor 501 is configured to execute the program code 510 stored in the memory 503. The computer device may implement, by using the processor 501 and the program code 510 in the memory 503, operations performed by a base station in a HARQ process identifier determining method provided in an embodiment in FIG. 6 below.

Before the HARQ process identifier determining method provided in embodiments of this application is described in detail, a semi-static resource in embodiments of this application is first briefly described.

A resource scheduled in a semi-persistent scheduling mode may be referred to as a semi-static resource. In some service scenarios, for example, in an XR service scenario or another service scenario in which a non-integer scheduling cycle needs to be used, a semi-static resource used in the service scenario includes a plurality of sets of resources, each of the plurality of sets of resources may have a scheduling cycle, and a combination of the plurality of sets of resources may approximately satisfy a configuration of the non-integer scheduling cycle. Optionally, each of the plurality of sets of resources includes a plurality of resources. In embodiments of this application, the semi-static resource occurs in a slot, or the semi-static resource occurs at a symbol. Related concepts of the slot and the symbol have been described above, and details are not described herein again.

The following describes in detail the HARQ process identifier determining method provided in embodiments of this application.

FIG. 6 is a flowchart of a HARQ process identifier determining method according to an embodiment of this application. Refer to FIG. 6. The method includes the following steps.

Step 601: A terminal receives semi-static resource configuration information.

The semi-static resource configuration information indicates to configure a semi-static resource. For example, the semi-static resource configuration information may be RRC information, MAC CE information, or DCI. Certainly, the semi-static resource configuration information may alternatively be another type of information, provided that the semi-static resource can be configured by using the semi-static resource configuration information. This is not limited in this embodiment of this application.

Optionally, there may be a plurality of pieces of semi-static resource configuration information, and each piece of semi-static resource configuration information carries configuration information of one set of resources. In this way, configuration information of each of a plurality of sets of resources may be obtained with reference to a plurality of pieces of semi-static resource configuration information, that is, configuration information of the semi-static resource is obtained. Alternatively, there may be one piece of semi-static resource configuration information, and the one piece of semi-static resource configuration information may carry configuration information of each of a plurality of sets of resources, that is, carry configuration information of the semi-static resource.

The semi-static resource configuration information may be sent by a base station to the terminal. When the terminal needs to perform service data transmission with the base station, the base station may send the semi-static resource configuration information to the terminal, and the terminal may configure the corresponding semi-static resource based on the semi-static resource configuration information, and use the semi-static resource to send service data (that is, uplink service data) to the base station and receive service data (that is, downlink service data) sent by the base station.

The semi-static resource includes the plurality of sets of resources. Optionally, each of the plurality of sets of resources includes a plurality of resources. Optionally, each of the plurality of sets of resources may have a scheduling cycle. Optionally, scheduling cycles of the plurality of sets of resources may be the same or different. For example, the scheduling cycle of each of the plurality of sets of resources may be 50 ms. Optionally, a combination of the plurality of sets of resources can approximately satisfy a configuration of a non-integer scheduling cycle. For example, a time offset may be introduced for another set of resources other than a $1^{st}$ set of resources in the plurality of sets of resources, and corresponding time domain matching is implemented by using the time offset in time domain, to approximately satisfy the configuration of the non-integer scheduling cycle. Alternatively, a time domain offset of each set of resources may be implemented by using different activation time for each of the plurality of sets of resources, to approximately satisfy the configuration of the non-integer scheduling cycle.

In some embodiments, there is a time domain interval between resources that are adjacent in time domain in the entire semi-static resource (that is, the plurality of sets of resources as a whole). Optionally, the time domain interval is used to implement a non-integer scheduling cycle desired when the semi-static resource is configured. In other words, time domain intervals between resources that are adjacent in time domain in the entire semi-static resource are the same or close, and are close to the non-integer scheduling cycle desired when the semi-static resource is configured.

For example, the semi-static resource includes M sets of resources, and M is an integer greater than or equal to 2. In this case, resources (which may also be referred to as adjacent resources in the semi-static resource) that are adjacent in time domain in the semi-static resource are sequentially a $1^{st}$ resource in a $1^{st}$ set of resources, a $1^{st}$ resource in a $2^{nd}$ set of resources, ..., a $1^{st}$ resource in an $M^{th}$ set of resources, a $2^{nd}$ resource in the $1^{st}$ set of resources, a $2^{nd}$ resource in the $2^{nd}$

set of resources, ..., a 2nd resource in the Mth set of resources, a 3rd resource in the 1st set of resources, a 3rd resource in the 2nd set of resources, ..., a 3rd resource in the Mth set of resources, ..., and the like. There is a time domain interval between any two adjacent resources in the semi-static resource.

In other words, the semi-static resource includes the M sets of resources. The semi-static resource includes resources in the M sets of resources in a time domain sequence. A 1st resource in the semi-static resource is a resource that occurs first in time domain, a 2nd resource in the semi-static resource is a resource that occurs second in time domain, a 3rd resource in the semi-static resource is a resource that occurs third in time domain, and so on.

It should be noted that if the semi-static resource occurs in a slot, the time domain interval between adjacent resources in the semi-static resource may also be referred to as a slot interval. If the semi-static resource occurs at a symbol, the time domain interval between adjacent resources in the semi-static resource may also be referred to as a symbol interval.

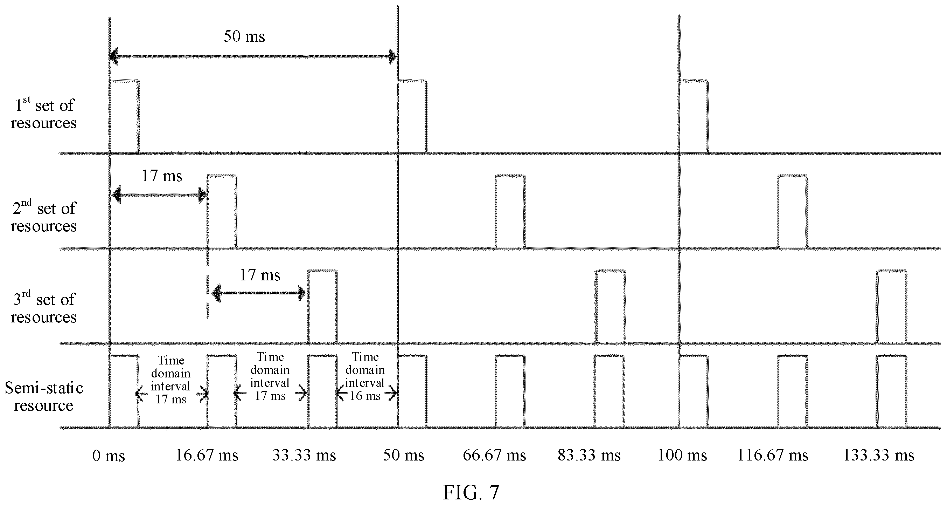

For example, as shown in FIG. 7, the semi-static resource includes three sets of resources, a scheduling cycle of each set of resources is 50 ms, a time offset of a 2nd set of resources is 17 ms, and a time offset of a 3rd set of resources is 16 ms. Adjacent resources in the semi-static resource are sequentially a 1st resource in a first resource, a 1st resource in a 2nd set of resources, ..., a 1st resource in a 3rd set of resources, a 2nd resource in the 1st set of resources, a 2nd resource in the 2nd set of resources, ..., a 2nd resource in the 3rd set of resources, a 3rd resource in the 1st set of resources, a 3rd resource in the 2nd set of resources, ..., a 3rd resource in the 3rd set of resources, ..., and the like. It can be learned that time intervals between the adjacent resources in the semi-static resource include 17 ms and 16 ms.

In some embodiments, the semi-static resource configuration information may further carry an identifier offset, and the identifier offset may be preset by the base station. The identifier offset is an offset between a HARQ process identifier for the semi-static resource and a HARQ process identifier for another resource. In other words, the identifier offset indicates a required offset of the HARQ process identifier for the semi-static resource relative to that of the another resource. In some other embodiments, the terminal may receive HARQ process identifier configuration information, where the HARQ process identifier configuration information may carry an identifier offset. The HARQ process identifier configuration information may be information sent by the base station to the terminal, to indicate to configure the HARQ process identifier. The HARQ process identifier configuration information and the semi-static resource configuration information may be the same information or different information, for example, may be different types of information or a same type of information sent at different time. This is not limited in this embodiment of this application. For example, the HARQ process identifier configuration information may be RRC information, MAC CE information, or DCI. Certainly, the HARQ process identifier configuration information may alternatively be another type of information, provided that the HARQ process identifier for the semi-static resource can be configured by using the HARQ process identifier configuration information. This is not limited in this embodiment of this application.

In this embodiment of this application, after receiving the semi-static resource configuration information, the terminal not only needs to configure the semi-static resource based on the semi-static resource configuration information, but also needs to determine an identifier (or referred to as a HARQ process identifier for each resource in the semi-static resource) of a HARQ process associated with each resource in the semi-static resource, so that the terminal can transmit data on each resource by using the HARQ process identified by the HARQ process identifier for each resource in the semi-static resource.

Specifically, the terminal may determine the HARQ process identifier for each resource in the semi-static resource in a manner provided in the following step 602 or step 603. This is described in detail below.

Step 602: The terminal determines the HARQ process identifier for each resource in a semi-static resource based on a target time domain interval between adjacent resources in the semi-static resource.

It should be noted that in this embodiment of this application, for each resource in each of the plurality of sets of resources in the semi-static resource, the terminal may determine a HARQ process identifier based on the target time domain interval. In this way, the terminal determines HARQ process identifiers for all resources in the semi-static resource in a unified determining manner by using the plurality of sets of resources in the semi-static resource as a whole. Because an independent identifier offset does not need to be introduced to determine a HARQ process identifier for each set of resources in the semi-static resource, not only complexity in determining the HARQ process identifier is reduced, but also efficiency of determining the HARQ process identifier is improved. In addition, a number of HARQ processes required by the semi-static resource can be effectively reduced, so that system capacity can be improved.

The target time domain interval may be determined based on the time domain interval between adjacent resources in the semi-static resource. Optionally, the target time domain interval indicates the non-integer scheduling cycle desired when the semi-static resource is configured. In other words, the target time domain interval is close to the non-integer scheduling cycle desired when the semi-static resource is configured. In an example, the target time domain interval may be an average value, a maximum value, or a minimum value of time domain intervals between adjacent resources in the semi-static resource. This is not limited in this embodiment of this application. For example, in the semi-static resource shown in FIG. 7, the target time domain interval may be the average value of the time domain intervals between the adjacent resources in the semi-static resource, that is, 17 ms + 16 ms = 16.5 ms. Alternatively, the target time domain interval may be the maximum value of the time domain intervals between the adjacent resources in the semi-static resource, that is, 17 ms. Alternatively, the target time domain interval may be the minimum value of the time domain intervals between the adjacent resources in the semi-static resource, that is, 16 ms.

In some embodiments, the semi-static resource configuration information or the HARQ process identifier configuration information may include a determining rule for the target time domain interval. The determining rule indicates a manner of determining the target time domain interval. For example, the determining rule indicates whether to use the average value of the time domain intervals between the adjacent resources in the semi-static resource as the target time domain interval, use the maximum value of the time domain intervals between the adjacent resources in the semi-static resource as the target time domain interval, or use the minimum value of the time domain intervals between the adjacent resources in the semi-static resource as the target time domain interval. In other words, the determining rule is using the average value, the maximum value, or the minimum value of the time domain intervals between the adjacent resources in the semi-static resource as the target time domain interval. After receiving the determining rule, the terminal may determine the target time domain interval according to the determining rule and based on the time domain intervals between the adjacent resources in the semi-static resource.

Optionally, the semi-static resource configuration information may carry a time offset of each of the plurality of sets of resources in the semi-static resource. The terminal may determine the time domain intervals between the adjacent resources in the semi-static resource based on the time offset of each of the plurality of sets of resources. In an example, if the semi-static resource includes the M sets of resources, the terminal may use a time offset of the 2nd set of resources as a time domain interval, use a difference between a time offset of the 3rd set of resources and the time offset of the 2nd set of resources as a time domain interval, and by analogy, use a difference between a time offset of the Mth set of resources and a time offset of an (M-1)th set of resources as a time domain interval. In this way, a time domain interval between any two adjacent resources in the semi-static resource may be obtained. Then, the terminal may determine the target time domain interval based on the time domain intervals between the adjacent resources in the semi-static resource. Then, the terminal may determine the HARQ process identifier for each resource in the semi-static resource based on the target time domain interval in any one of the following four possible manners.

In a first possible manner, if the semi-static resource occurs in the slot, for a current slot in the semi-static resource, the current slot is divided by the target time domain interval to obtain a first value. A round-down operation is performed on a value obtained by multiplying the first value by an adjustment factor, to obtain a second value. A modulo operation is performed on the second value and a preset number of HARQ processes to obtain a HARQ process identifier for the current slot.

If the semi-static resource occurs in the slot, the target time domain interval may be referred to as a target slot interval.

The current slot in the first possible manner may be any slot in the semi-static resource. Optionally, the current slot = a number of slots per frame * an SFN + a slot number in a frame, where the number of slots per frame is a number of slots per frame in the semi-static resource, the SFN is a system frame number, and the slot number in the frame is a slot number of the current slot in the frame.

The adjustment factor may be preset. For example, the adjustment factor may be a value obtained by dividing a number of subframes per frame in the semi-static resource by the number of slots per frame in the semi-static resource. Certainly, the adjustment factor may alternatively be another value set based on an actual requirement. For example, in some cases, the adjustment factor may be 1.

The number of subframes per frame in the semi-static resource may be preset, for example, may be 10. In other words, in this embodiment of this application, the number of subframes per frame in the semi-static resource is a preset constant value. For example, the number of subframes per frame in the semi-static resource may be configured and notified to the terminal by the base station, or may be defined in a related communication protocol used by the terminal and the base station, or certainly, may be preset in another form. This is not limited in this embodiment of this application.

The number of slots per frame (number Of Slots Per Frame) in the semi-static resource may be preset. In other words, in this embodiment of this application, the number of slots per frame in the semi-static resource may be a preset constant value. For example, the number of slots per frame in the semi-static resource may be configured and notified to the terminal by the base station, or may be defined in the related communication protocol used by the terminal and the base station, or certainly, may be preset in another form. This is not limited in this embodiment of this application.

The preset number of HARQ processes may be preset. In other words, in this embodiment of this application, the preset number of HARQ processes may be a preset constant value. The preset number of HARQ processes is the number of HARQ processes required by the semi-static resource. In other words, the preset number of HARQ processes is a number of HARQ processes configured for a service using the semi-static resource, and is a maximum number of HARQ processes that can be used for the service. For example, the preset number of HARQ processes may be configured and notified to the terminal by the base station, or may be defined in the related communication protocol used by the terminal and the base station, or certainly, may be preset in another form. This is not limited in this embodiment of this application.

In some embodiments, the first possible manner may be implemented by using the following mathematical

formula:

$$ID = \left\lfloor \frac{slot}{p} \times Z \right\rfloor \; mod \; K$$

*ID* is the HARQ process identifier for the current slot. *slot* is the current slot. *p* is the target time domain interval. *Z* is the adjustment factor. *K* is the preset number of HARQ processes. $\lfloor \rfloor$ is a round-down operator. *mod* is a modulo operator.

In some embodiments, the first possible manner may be implemented by using the following programming language formula:

HARQ Process ID = [floor (CURRENT_slot $\times$ Z / p)] modulo nrofHARQ- Processes

HARQ Process ID is the HARQ process identifier for the current slot. CURRENT_slot is the current slot. p is the target time domain interval. Z is the adjustment factor, and for example, may be 10/the number of slots per frame. nrofHARQ-Processes is the preset number of HARQ processes. floor is a round-down function. modulo is a modulo function.

In the first possible manner, second values obtained based on slots in the semi-static resource and the target time domain interval tend to increase, so that HARQ process identifiers for the slots that are obtained by performing modulo operations on the second values and the preset number of HARQ processes are 0, 1, ..., and Y-1. The HARQ process identifiers for the slots in the semi-static resource cycle continuously from 0 to Y-1, where Y is the preset number of HARQ processes. In this way, identifiers of Y HARQ processes associated with the semi-static resource may be determined, that is, the Y HARQ processes configured for the service using the semi-static resource are determined. It should be noted that when the HARQ process identifiers for the slots in the semi-static resource cycle continuously from 0 to Y-1, one cycle starts from a HARQ process identifier for a 1st slot in the semi-static resource, and ends at the HARQ process identifier for the 1st slot in the semi-static resource minus 1. The HARQ process identifier for the 1st slot in the semi-static resource may be any one of 0, 1, ..., and Y-1.

In the first possible manner, the semi-static resource is directly used as a whole, the target time domain interval is used as an actual scheduling cycle of the semi-static resource, and then the HARQ process identifier for the current slot is directly determined based on the current slot, the target time domain interval, and the preset number of HARQ processes. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

In a second possible manner, if the semi-static resource configuration information carries the identifier offset, and the semi-static resource occurs in the slot, for a current slot in the semi-static resource, the current slot is divided by the target time domain interval to obtain a first value. A round-down operation is performed on a value obtained by multiplying the first value by an adjustment factor, to obtain a second value. A value obtained by performing a modulo operation on the second value and a preset number of HARQ processes, and the identifier offset are added, to obtain a HARQ process identifier for the current slot.

If the semi-static resource occurs in the slot, the target time domain interval may be referred to as a target slot interval.

Related concepts of the current slot, the adjustment factor, the number of subframes per frame in the semi-static resource, the number of slots per frame in the semi-static resource, and the preset number of HARQ processes in the second possible manner are all the same as those in the first possible manner, and details are not described herein again.

The identifier offset may be preset by the base station. The identifier offset is the offset between the HARQ process identifier for the semi-static resource and the HARQ process identifier for another resource. In other words, the identifier offset indicates the required offset of the HARQ process identifier for the semi-static resource relative to that of the another resource.

In some embodiments, the second possible manner may be implemented by using the following mathematical formula:

$$ID = \left\lfloor \frac{slot}{p} \times Z \right\rfloor \; mod \; K + Offset$$

*ID* is the HARQ process identifier for the current slot. *slot* is the current slot. *p* is the target time domain interval. *Z* is the adjustment factor. *K* is the preset number of HARQ processes. ⌊ ⌋ is a round-down operator. *mod* is a modulo operator. *Offset* is the identifier offset.

In some embodiments, the second possible manner may be implemented by using the following programming language formula:

HARQ Process ID = [floor (CURRENT_slot × Z / p)] modulo nrofHARQ-Processes + harq-ProcID-Offset

HARQ Process ID is the HARQ process identifier for the current slot. CURRENT_slot is the current slot. p is the target time domain interval. Z is the adjustment factor. nrofHARQ-Processes is the preset number of HARQ processes. harq-ProcID-Offset is the identifier offset. floor is a round-down function. modulo is a modulo function.

When the semi-static resource configuration information carries the identifier offset, the terminal needs to consider the identifier offset when determining the HARQ process identifier for each resource in the semi-static resource. Therefore, after the second value is obtained based on the current slot and the target time domain interval, the value obtained by performing the modulo operation on the second value and the preset number of HARQ processes, and the identifier offset need to be added, to obtain the HARQ process identifier for the current slot. In this way, offset of a HARQ process identifier for a current resource in the semi-static resource relative to the HARQ process identifier for the another resource is implemented, thereby avoiding a conflict between the HARQ process identifier for the semi-static resource and the HARQ process identifier of the another resource.

In the second possible manner, second values obtained based on slots in the semi-static resource and the target time domain interval tend to increase, so that HARQ process identifiers for the slots that are obtained by adding values obtained by performing modulo operations on the second values and the preset number of HARQ processes, and the identifier offset are 0+F, 1+F, ..., and Y-1+F. The HARQ process identifiers for the slots in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined. It should be noted that when the HARQ process identifiers for the slots in the semi-static resource cycle continuously from 0 to Y-1, one cycle starts from a HARQ process identifier for a 1st slot in the semi-static resource, and ends at the HARQ process identifier for the 1st slot in the semi-static resource minus 1. The HARQ process identifier for the 1st slot in the semi-static resource may be any one of 0+F, 1+F, ..., and Y-1+F.

In the second possible manner, the semi-static resource is directly used as a whole, the target time domain interval is used as an actual scheduling cycle of the semi-static resource, and then the HARQ process identifier for the current slot is directly determined based on the current slot, the target time domain interval, the preset number of HARQ processes, and the identifier offset. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

It should be noted that in this embodiment of this application, when the HARQ process identifier for the semi-static resource is determined, the concept of the identifier offset may be introduced, or the concept of the identifier offset may not be introduced. In a case in which the concept of the identifier offset is not introduced when the HARQ process identifier for the semi-static resource is determined, that is, the identifier offset does not need to be considered when the HARQ process identifier for the semi-static resource is determined, that is, there is no identifier offset field when the semi-static resource configuration information is defined, if the semi-static resource occurs in the slot, the first possible manner may be directly used to determine the HARQ process identifier for each resource in the semi-static resource. In a case in which the concept of the identifier offset is introduced when the HARQ process identifier for the semi-static resource is determined, that is, the identifier offset needs to be considered when the HARQ process identifier for the semi-static resource is determined, that is, there is an identifier offset field when the semi-static resource configuration information is defined, if the semi-static resource occurs in the slot, the first possible manner may be used to determine the HARQ process identifier for each resource in the semi-static resource when the semi-static resource configuration information does not carry the identifier offset, or the second possible manner may be used to determine the HARQ process identifier for each resource in the semi-static resource when the semi-static resource configuration information carries the identifier offset.

In a third possible manner, if the semi-static resource occurs at the symbol, for a current symbol in the semi-static resource, a round-down operation is performed on a value obtained by dividing the current symbol by the target time domain interval, to obtain a third value. A modulo operation is performed on the third value and a preset number of HARQ processes to obtain a HARQ process identifier for the current symbol.

If the semi-static resource occurs at the symbol, the target time domain interval may be referred to as a target symbol interval.

The current symbol in the third possible manner may be any symbol in the semi-static resource. Optionally, the current symbol = a number of slots per frame * a number of symbols per slot * an SFN + a slot number in a frame * the number of slots per frame + a symbol number in a slot, where the number of slots per frame is a number of slots per frame in the semi-static resource, the number of symbols per slot is a number of symbols per slot in the semi-static resource, the slot number in the frame is a slot number of a slot to which the current symbol belongs in the frame, and the symbol number in the slot is a symbol number of the current symbol in the slot to which the current symbol belongs.

The number of slots per frame in the semi-static resource may be preset. In other words, in this embodiment of this application, the number of slots per frame in the semi-static resource may be a preset constant value. For example, the number of slots per frame in the semi-static resource may be configured and notified to the terminal by the base station, or may be defined in a related communication protocol used by the terminal and the base station, or certainly, may be preset in another form. This is not limited in this embodiment of this application.

The number of symbols per slot in the semi-static resource may be preset, for example, may be 14. In other words, in this embodiment of this application, the number of symbols per slot in the semi-static resource may be a preset constant value. For example, the number of symbols per slot in the semi-static resource may be configured and notified to the terminal by the base station, or may be defined in a related communication protocol used by the terminal and the base station, or certainly, may be preset in another form. This is not limited in this embodiment of this application.

The preset number of HARQ processes may be preset. In other words, in this embodiment of this application, the preset number of HARQ processes may be a preset constant value. The preset number of HARQ processes is the number of HARQ processes required by the semi-static resource. In other words, the preset number of HARQ processes is a number of HARQ processes configured for a service using the semi-static resource, and is a maximum number of HARQ processes that can be used for the service. For example, the preset number of HARQ processes may be configured and notified to the terminal by the base station, or may be defined in the related communication protocol used by the terminal and the base station, or certainly, may be preset in another form. This is not limited in this embodiment of this application.

In some embodiments, the third possible manner may be implemented by using the following mathematical formula:

$$ID = \left\lfloor \frac{symbol}{p} \right\rfloor \; mod \; K$$

*ID* is the HARQ process identifier for the current symbol. *symbol* is the current symbol. *p* is the target time domain interval. *K* is the preset number of HARQ processes. $\lfloor \rfloor$ is a round-down operator. *mod* is a modulo operator.

In some embodiments, the third possible manner may be implemented by using the following programming language formula:

HARQ Process ID = [floor(CURRENT_symbol / p)] modulo nrofHARQ- Processes

HARQ Process ID is the HARQ process identifier for the current symbol. CURRENT_symbol is the current symbol. p is the target time domain interval. nrofHARQ-Processes is the preset number of HARQ processes. floor is a round-down function. modulo is a modulo function.

In the third possible manner, third values obtained based on symbols in the semi-static resource and the target time domain interval tend to increase, so that HARQ process identifiers for the symbols that are obtained by performing modulo operations on the third values and the preset number of HARQ processes are 0, 1, ..., and Y-1. The HARQ process identifiers for the symbols in the semi-static resource cycle continuously from 0 to Y-1, where Y is the preset number of HARQ processes. In this way, identifiers of Y HARQ processes associated with the semi-static resource may be determined, that is, the Y HARQ processes configured for a service using the semi-static resource are determined. It should be noted that when the HARQ process identifiers for the symbols in the semi-static resource cycle continuously from 0 to Y-1, one cycle starts from a HARQ process identifier for a 1st symbol in the semi-static resource, and ends at the HARQ process identifier for the 1st symbol in the semi-static resource minus 1. The HARQ process identifier for the 1st symbol in the semi-static resource may be any one of 0, 1, ..., and Y-1.

In the third possible manner, the semi-static resource is directly used as a whole, the target time domain interval is used as an actual scheduling cycle of the semi-static resource, and then the HARQ process identifier for the current symbol is directly determined based on the current symbol, the target time domain interval, and the preset number of HARQ processes. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

In the fourth possible manner, if the semi-static resource configuration information carries the identifier offset, and the semi-static resource occurs at the symbol, for a current symbol in the semi-static resource, a round-down operation is performed on a value obtained by dividing the current symbol by the target time domain interval, to obtain a third value. A value obtained by performing a modulo operation on the third value and a preset number of HARQ processes, and the identifier offset are added, to obtain a HARQ process identifier for the current symbol.

If the semi-static resource occurs at the symbol, the target time domain interval may be referred to as a target symbol interval.

Related concepts of the current symbol, the number of slots per frame in the semi-static resource, the number of symbols per slot in the semi-static resource, and the preset number of HARQ processes in the fourth possible manner are the same as those in the third possible manner, and details are not described herein again.

The identifier offset may be preset by the base station. The identifier offset is the offset between the HARQ process identifier for the semi-static resource and the HARQ process identifier for another resource. In other words, the identifier offset indicates the required offset of the HARQ process identifier for the semi-static resource relative to that of the another resource.

In some embodiments, the fourth possible manner may be implemented by using the following mathematical formula:

$$ID = \left\lfloor \frac{symbol}{p} \right\rfloor \bmod K + Offset$$

*ID* is the HARQ process identifier for the current symbol. *symbol* is the current symbol. *p* is the target time domain interval. *K* is the preset number of HARQ processes. $\lfloor \ \rfloor$ is a round-down operator. *mod* is a modulo operator. *Offset* is the identifier offset.

In some embodiments, the fourth possible manner may be implemented by using the following programming language formula:

HARQ Process ID = [floor(CURRENT_symbol/p)] modulo nrofHARQ-Processes + harq-ProcID-Offset

HARQ Process ID is the HARQ process identifier for the current symbol. CURRENT_symbol is the current symbol. p is the target time domain interval. nrofHARQ-Processes is the preset number of HARQ processes. harq-ProcID-Offset is the identifier offset. floor is a round-down function. modulo is a modulo function.

When the semi-static resource configuration information carries the identifier offset, the terminal needs to consider the identifier offset when determining the HARQ process identifier for each resource in the semi-static resource. Therefore, after the third value is obtained based on the current symbol and the target time domain interval, the value obtained by performing the modulo operation on the third value and the preset number of HARQ processes, and the identifier offset need to be added, to obtain the HARQ process identifier for the current symbol. In this way, offset of the HARQ process identifier for the current symbol in the semi-static resource relative to the HARQ process identifier for the another resource is implemented, thereby avoiding a conflict between the HARQ process identifier for the semi-static resource and the HARQ process identifier of the another resource.

In the fourth possible manner, third values obtained based on symbols in the semi-static resource and the target time domain interval tend to increase, so that HARQ process identifiers for the symbols that are obtained by adding values obtained by performing modulo operations on the third values and the preset number of the HARQ processes, and the identifier offset are 0+F, 1+F, ..., and Y-1+F. The HARQ process identifiers for the symbols in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined. It should be noted that when the HARQ process identifiers for the symbols in the semi-static resource cycle continuously from 0+F to Y-1+F, one cycle starts from a HARQ process identifier for a 1st symbol in the semi-static resource, and ends at the HARQ process identifier for the 1st symbol in the semi-static resource minus 1. The HARQ process identifier for the 1st symbol in the semi-static resource may be any one of 0+F, 1+F, ..., and Y-1+F.

In the fourth possible manner, the semi-static resource is directly used as a whole, the target time domain interval is used as an actual scheduling cycle of the semi-static resource, and then the HARQ process identifier for the current symbol is directly determined based on the current symbol, the target time domain interval, the preset number of HARQ processes, and the identifier offset. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

It should be noted that in this embodiment of this application, when the HARQ process identifier for the semi-static resource is determined, the concept of the identifier offset may be introduced, or the concept of the identifier offset may not be introduced. In a case in which the concept of the identifier offset is not introduced when the HARQ process identifier for the semi-static resource is determined, that is, the identifier offset does not need to be considered when the HARQ process identifier for the semi-static resource is determined, that is, there is no identifier offset field when the semi-static resource configuration information is defined, if the semi-static resource occurs at the symbol, the third possible manner may be directly used to determine the HARQ process identifier for each resource in the semi-static resource. In a case in which the concept of the identifier offset is introduced when the HARQ process identifier for the semi-static resource is determined, that is, the identifier offset needs to be considered when the HARQ process identifier for the semi-static resource is determined, that is, there is an identifier offset field when the semi-static resource configuration information is defined, if the semi-static resource occurs at the symbol, the third possible manner may be used to determine the HARQ process identifier for each resource in the semi-static resource when the semi-static resource configuration information does not carry the identifier offset, or the fourth possible manner may be used to determine the HARQ process identifier for each resource in the semi-static resource when the semi-static resource configuration information carries the identifier offset.

Step 603: The terminal determines the HARQ process identifier for each resource in the semi-static resource based on a target flag value.

It should be noted that in this embodiment of this application, for each resource in each of the plurality of sets of resources in the semi-static resource, the terminal may determine a HARQ process identifier based on the target flag value. In this way, the terminal determines HARQ process identifiers for all resources in the semi-static resource in a unified determining manner by using the plurality of sets of resources in the semi-static resource as a whole. Because an independent identifier offset does not need to be introduced to determine a HARQ process identifier for each set of resources in the semi-static resource, not only complexity in determining the HARQ process identifier is reduced, but also efficiency of determining the HARQ process identifier is improved. In addition, a number of HARQ processes required by the semi-static resource can be effectively reduced, so that system capacity can be improved.

The target flag value may be associated with each resource in the semi-static resource. Alternatively, the target flag value may be a preset flag value. In some embodiments, the semi-static resource configuration information or the HARQ process identifier configuration information may include the target flag value.

If the target flag value is the preset flag value, for example, the preset flag value may be preset. In other words, in this embodiment of this application, the preset flag value may be a preset constant value. For example, the preset flag value may be configured and notified to the terminal by the base station, or may be defined in a related communication protocol used by the terminal and the base station, or certainly, may be preset in another form. This is not limited in this embodiment of this application.

Optionally, when the target flag value is the preset flag value, step 603 may be implemented in any one of the following Manner A to Manner D.

Manner A: For a current resource in the semi-static resource, add the preset flag value and at least one preset increment to obtain a fourth value, and perform a modulo operation on the fourth value and a preset number of HARQ processes to obtain a HARQ process identifier for the current resource.

The current resource is a current slot or a current symbol. If the semi-static resource occurs in the slot, the current resource is the current slot; or if the semi-static resource occurs at the symbol, the current resource is the current symbol.

The preset increment may be preset. In this embodiment of this application, for each resource in the semi-static resource, when a fourth value is calculated, a number of preset increments to be added to the preset flag value may be different. For example, for the 1st resource in the semi-static resource, when a HARQ process identifier for the 1st resource is determined, the preset flag value and one preset increment may be added to obtain a fourth value. For the 2nd resource in the semi-static resource, when a HARQ process identifier for the 2nd resource is determined, the preset flag value and two preset increments may be added to obtain a fourth value. For the 3rd resource in the semi-static resource, when a HARQ process identifier for the 3rd resource is determined, the preset flag value and three preset increments may be added to obtain a fourth value. The rest is deduced by analogy. For resources in the semi-static resource, fourth values obtained by adding the preset flag value and the at least one preset increment increase.

In some embodiments, the semi-static resource configuration information or the HARQ process identifier configuration information may include the preset increment. For example, the semi-static resource configuration information or the HARQ process identifier configuration information may include the preset flag value and the preset increment, so that the terminal may determine the HARQ process identifier for each resource in the semi-static resource based on the preset flag value and the preset increment.

In Manner A, the fourth values obtained based on the preset flag value and the preset increment tend to increase, so that HARQ process identifiers for the resources that are obtained by performing modulo operations on the fourth values and the preset number of HARQ processes are 0, 1, ..., and Y-1. The HARQ process identifiers for the resources in the semi-static resource cycle continuously from 0 to Y-1, where Y is the preset number of HARQ processes. In this way, identifiers of Y HARQ processes associated with the semi-static resource may be determined, that is, the Y HARQ processes configured for a service using the semi-static resource are determined. It should be noted that when the HARQ process identifiers for the resources in the semi-static resource cycle continuously from 0 to Y-1, one cycle starts from a HARQ process identifier for the 1st resource in the semi-static resource, and ends at the HARQ process identifier for the 1st resource in the semi-static resource minus 1. The HARQ process identifier for the 1st resource in the semi-static resource may be any one of 0, 1, ..., and Y-1.

In Manner A, the semi-static resource is directly used as a whole, and the HARQ process identifier for the current resource is directly determined based on the preset flag value, the preset increment, and the preset number of HARQ processes. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

Manner B: If the semi-static resource configuration information carries the identifier offset, for a current resource in the semi-static resource, add the preset flag value and at least one preset increment to obtain a fourth value, and add a value obtained by performing a modulo operation on the fourth value and a preset number of HARQ processes, and the identifier offset, to obtain a HARQ process identifier for the current resource.

When the semi-static resource configuration information carries the identifier offset, the terminal needs to consider the identifier offset when determining the HARQ process identifier for each resource in the semi-static resource. Therefore, after the fourth value is obtained based on the preset flag value and the preset increment, the value obtained by performing the modulo operation on the fourth value and the preset number of HARQ processes, and the identifier offset need to be added, to obtain the HARQ process identifier for the current resource. In this way, offset of the HARQ process identifier for the current resource in the semi-static resource relative to the HARQ process identifier for the another resource is implemented, thereby avoiding a conflict between the HARQ process identifier for the semi-static resource and the HARQ process identifier of the another resource.

In Manner B, fourth values obtained based on the preset flag value and the preset increment tend to increase, so that HARQ process identifiers for resources that are obtained by adding values obtained by performing modulo operations on the fourth values and the preset number of HARQ processes, and the identifier offset are 0+F, 1+F, ..., and Y-1+F. The HARQ process identifiers for the resources in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined. It should be noted that when the HARQ process identifiers for the resources in the semi-static resource cycle continuously from 0 to Y-1, one cycle starts from a HARQ process identifier for the 1st resource in the semi-static resource, and ends at the HARQ process identifier for the 1st resource in the semi-static resource minus 1. The HARQ process identifier for the 1st resource in the semi-static resource may be any one of 0+F, 1+F, ..., and Y-1+F.

In Manner B, the semi-static resource is directly used as a whole, and the HARQ process identifier for the current resource is directly determined based on the preset flag value, the preset increment, the preset number of HARQ processes, and the identifier offset. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

It should be noted that in this embodiment of this application, when the HARQ process identifier for the semi-static resource is determined, the concept of the identifier offset may be introduced, or the concept of the identifier offset may not be introduced. In a case in which the concept of the identifier offset is not introduced when the HARQ process identifier for the semi-static resource is determined, that is, the identifier offset does not need to be considered when the HARQ process identifier for the semi-static resource is determined, that is, there is no identifier offset field when the semi-static resource configuration information is defined, Manner A may be directly used to determine the HARQ process identifier for each resource in the semi-static resource. In a case in which the concept of the identifier offset is introduced when the HARQ process identifier for the semi-static resource is determined, that is, the identifier offset needs to be considered when the HARQ process identifier for the semi-static resource is determined, that is, there is an identifier offset field when the semi-static resource configuration information is defined, Manner A may be used to determine the HARQ process identifier for each resource in the semi-static resource when the semi-static resource configuration information does not carry the identifier offset, or Manner B may be used to determine the HARQ process identifier for each resource in the semi-static resource when the semi-static resource configuration information carries the identifier offset.

Manner C: Obtain a specified HARQ process identifier. For a target resource other than the $1^{st}$ resource in the semi-static resource, add the specified HARQ process identifier, the preset flag value, and at least one preset increment to obtain a fifth value, and perform a modulo operation on the fifth value and a preset number of HARQ processes to obtain a HARQ process identifier for the target resource.

The specified HARQ process identifier is a HARQ process identifier for the $1^{st}$ resource in the semi-static resource.

If the semi-static resource configuration information does not carry the identifier offset, the specified HARQ process identifier may be an integer greater than or equal to 0 and less than the preset number of HARQ processes. In other words, the specified HARQ process identifier may be any one of 0, 1, ..., and Y-1, where Y is the preset number of HARQ processes.

If the semi-static resource configuration information carries the identifier offset, the specified HARQ process identifier may be an integer greater than or equal to F and less than the preset number of HARQ processes plus F. In other words, the specified HARQ process identifier may be any one of 0+F, 1+F, ..., and Y-1+F, where Y is the preset number of HARQ processes, and F is the identifier offset.

The preset increment may be preset. In this embodiment of this application, for each resource in the semi-static resource, when a fifth value is calculated, a number of preset increments to be accumulated to the specified HARQ process identifier and the preset flag value may be different. For example, for the $2^{nd}$ resource in the semi-static resource, when a HARQ process identifier for the $2^{nd}$ resource is determined, the specified HARQ process identifier, the preset flag value, and one preset increment may be accumulated to obtain a fifth value. For the $3^{rd}$ resource in the semi-static resource, when a HARQ process identifier for the $3^{rd}$ resource is determined, the specified HARQ process identifier, the preset flag value, and two preset increments may be accumulated to obtain a fifth value. For a $4^{th}$ resource in the semi-static resource, when a HARQ process identifier for the $4^{th}$ resource is determined, the specified HARQ process identifier, the preset flag value, and three preset increments may be accumulated to obtain a fifth value. The rest is deduced by analogy. For resources in the semi-static resource, fifth values obtained by accumulating the specified HARQ process identifier, the preset flag value, and the at least one preset increment increase.

In Manner C, the fifth values obtained based on the specified HARQ process identifier, the preset flag value, and the preset increment tend to increase, so that HARQ process identifiers for the resources that are obtained by performing modulo operations on the fifth values and the preset number of HARQ processes are 0, 1, ..., and Y-1. The HARQ process identifiers for the resources in the semi-static resource cycle continuously from 0 to Y-1, where Y is the preset number of HARQ processes. In this way, identifiers of Y HARQ processes associated with the semi-static resource may be determined, that is, the Y HARQ processes configured for a service using the semi-static resource are determined. It should be noted that when the HARQ process identifiers for the resources in the semi-static resource cycle continuously from 0 to Y-1, one cycle starts from the specified HARQ process identifier, and ends at the specified HARQ process identifier minus 1.

In Manner C, the semi-static resource is directly used as a whole, and the HARQ process identifier for the target resource is directly determined based on the specified HARQ process identifier, the preset flag value, the preset increment, and the preset number of HARQ processes. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

Manner D: If the semi-static resource configuration information carries the identifier offset, obtain a specified HARQ process identifier. For a target resource other than the $1^{st}$ resource in the semi-static resource, add the specified HARQ process identifier, the preset flag value, and at least one preset increment to obtain a fifth value, and add a value obtained by performing a modulo operation on the fifth value and a preset number of HARQ processes, and the identifier offset, to obtain a HARQ process identifier for the target resource.

When the semi-static resource configuration information carries the identifier offset, the terminal needs to consider the identifier offset when determining the HARQ process identifier for each resource in the semi-static resource. Therefore, after the fifth value is obtained based on the specified HARQ process identifier, the preset flag value, and the preset increment, the value obtained by performing the modulo operation on the fifth value and the preset number of HARQ processes, and the identifier offset need to be added, to obtain the HARQ process identifier for the target resource. In this way, offset of the HARQ process identifier for the target resource in the semi-static resource relative to the HARQ process identifier for the another resource is implemented, thereby avoiding a conflict between the HARQ process identifier for the semi-static resource and the HARQ process identifier of the another resource.

In Manner D, fifth values obtained based on the specified HARQ process identifier, the preset flag value, and the preset increment tend to increase, so that HARQ process identifiers for the resources that are obtained by adding values obtained by performing modulo operations on the fifth values and the preset number of HARQ processes, and the identifier offset are 0+F, 1+F, ..., and Y-1+F. The HARQ process identifiers for the resources in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined. It should be noted that when the HARQ process identifiers for the resources in the semi-static resource cycle continuously from 0 to Y-1, one cycle starts from the specified HARQ process identifier, and ends at the specified HARQ process identifier minus 1.

In Manner D, the semi-static resource is directly used as a whole, and the HARQ process identifier for the target resource is directly determined based on the specified HARQ process identifier, the preset flag value, the preset increment, the preset number of HARQ processes, and the identifier offset. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

It should be noted that in this embodiment of this application, when the HARQ process identifier for the semi-static resource is determined, the concept of the identifier offset may be introduced, or the concept of the identifier offset may not be introduced. In a case in which the concept of the identifier offset is not introduced when the HARQ process identifier for the semi-static resource is determined, that is, the identifier offset does not need to be considered when the HARQ process identifier for the semi-static resource is determined, that is, there is no identifier offset field when the semi-static resource configuration information is defined, Manner C may be directly used to determine the HARQ process identifier for each resource in the semi-static resource. In a case in which the concept of the identifier offset is introduced when the HARQ process identifier for the semi-static resource is determined, that is, the identifier offset needs to be considered when the HARQ process identifier for the semi-static resource is determined, that is, there is an identifier offset field when the semi-static resource configuration information is defined, Manner C may be used to determine the HARQ process identifier for each resource in the semi-static resource when the semi-static resource configuration information does not carry the identifier offset, or Manner D may be used to determine the HARQ process identifier for each resource in the semi-static resource when the semi-static resource configuration information carries the identifier offset.

If the target flag value is associated with each resource in the semi-static resource, for example, the target flag value may include a flag value of each resource in the semi-static resource.

For example, flag values of all resources in the semi-static resource may sequentially increase by a preset increasing amount.

The preset increasing amount is a positive integer. The preset increasing amount may be a preset constant value. The preset increasing amount is not an integer multiple of a preset number of HARQ process identifiers. For example, the preset increasing amount may be configured and notified to the terminal by the base station, or may be defined in the related communication protocol used by the terminal and the base station, or certainly, may be preset in another form. This is not limited in this embodiment of this application.

In a first example, the flag value of each resource in the semi-static resource may be preset, and may be set by a technical person based on an actual requirement. For example, the preset increasing amount is 2. A flag value of the $1^{st}$ resource in the semi-static resource may be 2, a flag value of the $2^{nd}$ resource may be 4, a flag value of the $3^{rd}$ resource may be 6, and so on.

In a second example, the flag value of each resource in the semi-static resource is a first index. The first index is a first resource index. Alternatively, the first index is a value obtained by subtracting 1 from a first resource index. Alternatively, the first index is a value obtained by adding 1 to a first resource index.

In this case, if it is defined that the flag values of all the resources in the semi-static resource sequentially increase by the preset increasing amount, the preset increasing amount is 1.

In this manner, the flag value of each resource in the semi-static resource is determined based on the first resource index of the resource. Therefore, a determining process is simple, helping improve efficiency of determining the HARQ process identifier for each resource in the semi-static resource.

For any resource in the semi-static resource, a first resource index of the resource indicates the resource in all the resources in the semi-static resource. In other words, the first resource index is a resource index in the semi-static resource. For example, a first resource index of the $1^{st}$ resource in the semi-static resource is 1, a first resource index of the $2^{nd}$ resource in the semi-static resource is 2, and a first resource index of the $3^{rd}$ resource in the semi-static resource is 3. Alternatively, a first resource index of the $1^{st}$ resource in the semi-static resource is 0, a first resource index of the $2^{nd}$

resource in the semi-static resource is 1, and a first resource index of the 3rd resource in the semi-static resource is 2.

It should be noted that indexes usually start from 0 or 1, and increase by using 1 as an increasing amount. In this embodiment of this application, if the first resource index is specified to start from 0, and the first index is also specified to start from 0, the first index may be the first resource index. If the first resource index is specified to start from 0, and the first index is specified to start from 1, the first index may be the value obtained by adding 1 to the first resource index. If the first resource index is specified to start from 1, and the first index is specified to start from 0, the first index may be the value obtained by subtracting 1 from the first resource index. If the first resource index is specified to start from 1, and the first index is also specified to start from 1, the first index may be the first resource index.

In a third example, the flag value of each resource in the semi-static resource is a value obtained by multiplying a third index by M and then adding a second index. In other words, the flag value of the resource = the second index of the resource + a number of sets * the third index of the resource. M is the number of sets of the plurality of sets of resources in the semi-static resource.

In this case, if it is defined that the flag values of all the resources in the semi-static resource sequentially increase by the preset increasing amount, the preset increasing amount is 1.

In this manner, the flag value of each resource in the semi-static resource is determined based on a second resource index and a third resource index of the resource. Therefore, a determining process is simple, helping improve efficiency of determining the HARQ process identifier for each resource in the semi-static resource.

The second index is the second resource index. Alternatively, the second index is a value obtained by subtracting 1 from the second resource index. Alternatively, the second index is a value obtained by adding 1 to the second resource index.

For any resource in the semi-static resource, a second resource index of the resource indicates, in the plurality of sets of resources in the semi-static resource, a set of resources to which the resource belongs. In other words, the second resource indexes are resource indexes of the plurality of sets of resources. For example, a second resource index of the 1st set of resources in the semi-static resource is 1 (that is, second resource indexes of all resources in the 1st set of resources are 1), a second resource index of the 2nd set of resources in the semi-static resource is 2 (that is, second resource indexes of all resources in the 2nd set of resources are 2), and a second resource index of the 3rd set of resources in the semi-static resource is 3 (that is, second resource indexes of all resources in the 3rd set of resources are 3). Alternatively, a second resource index of the 1st set of resources in the semi-static resource is 0 (that is, second resource indexes of all resources in the 1st set of resources are 0), a second resource index of the 2nd set of resources in the semi-static resource is 1 (that is, second resource indexes of all resources in the 2nd set of resources are 1), and a second resource index of the 3rd set of resources in the semi-static resource is 2 (that is, second resource indexes of all resources in the 3rd set of resources are 2).

It should be noted that indexes usually start from 0 or 1, and increase by using 1 as an increasing amount. In this embodiment of this application, if the second resource index is specified to start from 0, and the second index is also specified to start from 0, the second index may be the second resource index. If the second resource index is specified to start from 0, and the second index is specified to start from 1, the second index may be the value obtained by adding 1 to the second resource index. If the second resource index is specified to start from 1, and the second index is specified to start from 0, the second index may be the value obtained by subtracting 1 from the second resource index. If the second resource index is specified to start from 1, and the second index is also specified to start from 1, the second index may be the second resource index.

The third index is the third resource index. Alternatively, the third index is a value obtained by subtracting 1 from the third resource index. Alternatively, the third index is a value obtained by adding 1 to the third resource index.

For any resource in the semi-static resource, a third resource index of the resource indicates the resource in a plurality of resources in a set of resources to which the resource belongs. In other words, the third resource index is a resource index in each set of resources. For example, for any set of resources in the semi-static resource, a third resource index of a 1st resource in the set of resources is 1, a third resource index of a 2nd resource in the set of resources is 2, and a third resource index of a 3rd resource in the set of resources is 3. Alternatively, a third resource index of a 1st resource in the set of resources is 0, a third resource index of a 2nd resource in the set of resources is 1, and a third resource index of a 3rd resource in the set of resources is 2.

It should be noted that indexes usually start from 0 or 1, and increase by using 1 as an increasing amount. In this embodiment of this application, if the third resource index is specified to start from 0, and the third index is also specified to start from 0, the third index may be the third resource index. If the third resource index is specified to start from 0, and the third index is specified to start from 1, the third index may be the value obtained by adding 1 to the third resource index. If the third resource index is specified to start from 1, and the third index is specified to start from 0, the third index may be the value obtained by subtracting 1 from the third resource index. If the third resource index is specified to start from 1, and the third index is also specified to start from 1, the third index may be the third resource index.

It should be noted that the first resource index, the second resource index, and the third resource index may all be preset. For example, the first resource index, the second resource index, and the third resource index may be configured and notified to the terminal by the base station, or may be defined in the related communication protocol used by the terminal and the base station, or certainly, may be preset in another form. This is not limited in this embodiment of this application.

In some embodiments, the first index, the second index, and the third index may all be preset. For example, the first index, the second index, and the third index may be configured and notified to the terminal by the base station, or may be defined in the related communication protocol used by the terminal and the base station, or certainly, may be preset in another form. This is not limited in this embodiment of this application.

In some embodiments, the flag value of each of all the resources in the semi-static resource may be preset. For example, the flag value of each of all the resources in the semi-static resource may be configured and notified to the terminal by the base station, or may be defined in the related communication protocol used by the terminal and the base station, or certainly, may be preset in another form. This is not limited in this embodiment of this application.

Optionally, when the target flag value includes the flag value of each resource in the semi-static resource, and the flag values of all the resources in the semi-static resource sequentially increase by the preset increasing amount, step 603 may be implemented in the following Manner 1, Manner 2, or Manner 3.

Manner 1: For a current resource in the semi-static resource, perform a modulo operation on a flag value of the current resource and a preset number of HARQ processes to obtain a HARQ process identifier for the current resource.

The current resource is a current slot or a current symbol. If the semi-static resource occurs in the slot, the current resource is the current slot; or if the semi-static resource occurs at the symbol, the current resource is the current symbol. The current slot and the current symbol are both described above, and details are not described herein again.

Because the flag values of all the resources in the semi-static resource sequentially increase by the preset increasing amount, HARQ process identifiers for the resources that are obtained by performing modulo operations on flag values of the current resources and the preset number of HARQ processes are 0, 1, ..., and Y-1. The HARQ process identifiers for the resources in the semi-static resource cycle continuously from 0 to Y-1, where Y is the preset number of HARQ processes. In this way, identifiers of Y HARQ processes associated with the semi-static resource may be determined, that is, the Y HARQ processes configured for a service using the semi-static resource are determined. It should be noted that when the HARQ process identifiers for the resources in the semi-static resource cycle continuously from 0 to Y-1, one cycle starts from a HARQ process identifier for the 1st resource in the semi-static resource, and ends at the HARQ process identifier for the 1st resource in the semi-static resource minus 1. The HARQ process identifier for the 1st resource in the semi-static resource may be any one of 0, 1, ..., and Y-1.

In Manner 1, the semi-static resource is directly used as a whole, and the HARQ process identifier for the current resource is directly determined based on the flag value of the current resource and the preset number of HARQ processes. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

Manner 2: If the semi-static resource configuration information carries the identifier offset, for a current resource in the semi-static resource, add a value obtained by performing a modulo operation on a flag value of the current resource and a preset number of HARQ processes, and the identifier offset, to obtain a HARQ process identifier for the current resource.

The current resource is a current slot or a current symbol. If the semi-static resource occurs in the slot, the current resource is the current slot; or if the semi-static resource occurs at the symbol, the current resource is the current symbol. The current slot and the current symbol are both described above, and details are not described herein again.

The identifier offset may be preset by the base station. The identifier offset is the offset between the HARQ process identifier for the semi-static resource and the HARQ process identifier for another resource. In other words, the identifier offset indicates the required offset of the HARQ process identifier for the semi-static resource relative to that of the another resource.

When the semi-static resource configuration information carries the identifier offset, the terminal needs to consider the identifier offset when determining the HARQ process identifier for each resource in the semi-static resource. Therefore, after the modulo operation is performed on the flag value of the current resource and the preset number of HARQ processes, the value obtained through the modulo operation and the identifier offset need to be added, to obtain the HARQ process identifier for the current resource. In this way, offset of the HARQ process identifier for the current resource in the semi-static resource relative to the HARQ process identifier for the another resource is implemented, thereby avoiding a conflict between the HARQ process identifier for the semi-static resource and the HARQ process identifier of the another resource.

Because the flag values of all the resources in the semi-static resource sequentially increase by the preset increasing amount, HARQ process identifiers for the resources that are obtained by adding values obtained by performing modulo operations on flag values of the current resources and the preset number of HARQ processes, and the identifier offset are 0+F, 1+F, ..., and Y-1+F. The HARQ process identifiers for the resources in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined. It should be noted that when the HARQ process identifiers for the resources in the semi-static resource cycle continuously from 0+F to Y-1+F, one cycle starts from a HARQ process identifier for the 1st resource in the semi-static resource, and ends at the HARQ process identifier for the 1st resource in the semi-static resource minus 1. The HARQ process identifier for the 1st resource in the semi-static resource may be any one of 0+F, 1+F, ..., and Y-1+F.

In Manner 2, the semi-static resource is directly used as a whole, and the HARQ process identifier for the current resource is determined based on the flag value of the current resource, the preset number of HARQ processes, and the identifier offset. In this way, a HARQ process identifier for each resource in each of the plurality of sets of resources in the semi-static resource is determined in a unified manner, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

It should be noted that in this embodiment of this application, when the HARQ process identifier for the semi-static resource is determined, the concept of the identifier offset may be introduced, or the concept of the identifier offset may not be introduced. In a case in which the concept of the identifier offset is not introduced when the HARQ process identifier for the semi-static resource is determined, that is, the identifier offset does not need to be considered when the HARQ process identifier for the semi-static resource is determined, that is, there is no identifier offset field when the semi-static resource configuration information is defined, Manner 1 may be directly used to determine the HARQ process identifier for each resource in the semi-static resource. In a case in which the concept of the identifier offset is introduced when the HARQ process identifier for the semi-static resource is determined, that is, the identifier offset needs to be considered when the HARQ process identifier for the semi-static resource is determined, that is, there is an identifier offset field when the semi-static resource configuration information is defined, Manner 1 may be used to determine the HARQ process identifier for each resource in the semi-static resource when the semi-static resource configuration information does not carry the identifier offset, or Manner 2 may be used to determine the HARQ process identifier for each resource in the semi-static resource when the semi-static resource configuration information carries the identifier offset.

Manner 3: Obtain a specified HARQ process identifier. For a target resource other than the 1st resource in the semi-static resource, determine a HARQ process identifier for the target resource based on the specified HARQ process identifier and a flag value of the target resource.

In Manner 3, the semi-static resource is directly used as a whole, and the HARQ process identifier for the target resource is determined based on the specified HARQ process identifier and the flag value of the target resource. In this way, after the specified HARQ process identifier is obtained, a HARQ process identifier for a target resource in each of the plurality of sets of resources in the semi-static resource is determined in a unified determining manner by using the specified HARQ process identifier as a starting point, and an independent identifier offset does not need to be introduced to determine the HARQ process identifier for each set of resources in the semi-static resource. Therefore, not only the complexity in determining the HARQ process identifier is reduced, but also the efficiency of determining the HARQ process identifier is improved. In addition, a conflict between HARQ processes associated with the resources can be avoided when a small number of HARQ processes are used, so that the system capacity can be improved.

The operation of determining the HARQ process identifier for the target resource based on the specified HARQ process identifier and the flag value of the target resource may include the following Manner (1) or Manner (2).

Manner (1): Add the specified HARQ process identifier and the flag value of the target resource to obtain a sixth value, and perform a modulo operation on the sixth value and a preset number of HARQ processes to obtain the HARQ process identifier for the target resource.

In Manner (1), because the flag values of all the resources in the semi-static resource sequentially increase by the preset increasing amount, sixth values obtained based on the specified HARQ process identifiers and flag values of the target resources tend to increase. Therefore, HARQ process identifiers for the target resources that are obtained by performing modulo operations on the sixth values and the preset number of HARQ processes are 0, 1, ..., and Y-1. In this way, the HARQ process identifiers for the resources in the semi-static resource cycle continuously from 0 to Y-1, where Y is the preset number of HARQ processes. In this way, identifiers of Y HARQ processes associated with the semi-static resource may be determined, that is, the Y HARQ processes configured for a service using the semi-static resource are determined.

It should be noted that in Manner (1), when the HARQ process identifiers for the resources in the semi-static resource cycle continuously from 0 to Y-1, one cycle starts from the specified HARQ process identifier, and ends at the specified HARQ process identifier minus 1.

Manner (2): If the semi-static resource configuration information carries the identifier offset, add the specified HARQ process identifier and the flag value of the target resource to obtain a sixth value, and add a value obtained by performing a modulo operation on the sixth value and a preset number of HARQ processes, and the identifier offset, to obtain the HARQ process identifier for the target resource.

When the semi-static resource configuration information carries the identifier offset, the terminal needs to consider the identifier offset when determining the HARQ process identifier for the target resource in the semi-static resource. Therefore, after the sixth value is obtained based on the specified HARQ process identifier and the flag value of the target resource, the value obtained by performing the modulo operation on the sixth value and the preset number of HARQ processes, and the identifier offset need to be added, to obtain the HARQ process identifier for the target resource. In this way, offset of the HARQ process identifier for the target resource in the semi-static resource relative to the HARQ process identifier for the another resource is implemented, thereby avoiding a conflict between the HARQ process identifier for the semi-static resource and the HARQ process identifier of the another resource.

In Manner (2), because the flag values of all the resources in the semi-static resource sequentially increase by the preset increasing amount, sixth values obtained based on the specified HARQ process identifiers and flag values of the target resources tend to increase. Therefore, HARQ process identifiers for the target resources that are obtained by adding values obtained by performing modulo operations on the sixth values and the preset number of HARQ processes, and the identifier offset are 0+F, 1+F, ..., and Y-1+F. In this way, the HARQ process identifiers for the resources in the semi-static resource cycle continuously from 0+F to Y-1+F, where Y is the preset number of HARQ processes, and F is the identifier offset. In this way, identifiers of Y HARQ processes associated with the semi-static resource may be determined, that is, the Y HARQ processes configured for a service using the semi-static resource are determined.

It should be noted that in Manner (2), when the HARQ process identifiers for the resources in the semi-static resource cycle continuously from 0+F to Y-1+F, one cycle starts from the specified HARQ process identifier, and ends at the specified HARQ process identifier minus 1.

It should be noted that in this embodiment of this application, when the HARQ process identifier for the semi-static resource is determined, the concept of the identifier offset may be introduced, or the concept of the identifier offset may not be introduced. In a case in which the concept of the identifier offset is not introduced when the HARQ process identifier for the semi-static resource is determined, that is, the identifier offset does not need to be considered when the HARQ process identifier for the semi-static resource is determined, that is, there is no identifier offset field when the semi-static resource configuration information is defined, Manner (1) may be directly used to determine the HARQ process identifier for the target resource in the semi-static resource. In a case in which the concept of the identifier offset is introduced when the HARQ process identifier for the semi-static resource is determined, that is, the identifier offset needs to be considered when the HARQ process identifier for the semi-static resource is determined, that is, there is an identifier offset field when the semi-static resource configuration information is defined, Manner (1) may be used to determine the HARQ process identifier for the target resource in the semi-static resource when the semi-static resource configuration information does not carry the identifier offset, or Manner (2) may be used to determine the HARQ process identifier for the target resource in the semi-static resource when the semi-static resource configuration information carries the identifier offset.

The following describes several obtaining manners for the specified HARQ process identifier.

In a first example, the specified HARQ process identifier may be received by the terminal. For example, the terminal may receive indication information, where the indication information may carry the specified HARQ process identifier.

The indication information may be sent by the base station to the terminal, and indicates the HARQ process identifier for the 1st resource in the semi-static resource. For example, the indication information may be RRC information, MAC CE information, or DCI. Certainly, the indication information may alternatively be another type of information, provided that the indication information can indicate the HARQ process identifier for the 1st resource in the semi-static resource. This is not limited in this embodiment of this application.

In a second example, the specified HARQ process identifier may be a preset identifier.

The preset identifier may be a preset constant value. For example, the preset identifier may be configured and notified to the terminal by the base station, or may be defined in the related communication protocol used by the terminal and the base station, or certainly, may be preset in another form. This is not limited in this embodiment of this application.

In a third example, if the semi-static resource occurs in the slot, for a 1st slot in the semi-static resource, the 1st slot is divided by the target time domain interval to obtain a seventh value, or the 1st slot is divided by a scheduling cycle of a set of resources in which the 1st slot is located, to obtain a seventh value. A round-down operation is performed on a value obtained by multiplying the seventh value by an adjustment factor, to obtain an eighth value. A modulo operation is performed on the eighth value and the preset number of HARQ processes to obtain a HARQ process identifier for the 1st slot.

Optionally, the 1st slot = a number of slots per frame * an SFN + a slot number of the 1st slot in a frame.

The adjustment factor may be preset. For example, the adjustment factor may be a value obtained by dividing a number of subframes per frame in the semi-static resource by the number of slots per frame in the semi-static resource. Certainly, the adjustment factor may alternatively be another value set based on an actual requirement. This is not limited in this embodiment of this application.

In some embodiments, the third example may be implemented by using the following mathematical formula:

$$ID = \left\lfloor \frac{slot}{p} \times Z \right\rfloor \; mod \; K$$

*ID* is the HARQ process identifier for the 1st slot. *slot* is the 1st slot. *p* is the target time domain interval or the scheduling cycle of the set of resources in which the 1st slot is located. *Z* is the adjustment factor. *K* is the preset number of HARQ processes. ⌊ ⌋ is a round-down operator. *mod* is a modulo operator.

In some embodiments, the third example may be implemented by using the following programming language formula:

HARQ Process ID = [floor (CURRENT_slot × Z / p)] modulo nrofHARQ- Processes

HARQ Process ID is the HARQ process identifier for the 1st slot. CURRENT_slot is the 1st slot. p is the target time domain interval or the scheduling cycle of the set of resources in which the 1st slot is located. Z is the adjustment factor. nrofHARQ-Processes is the preset number of HARQ processes. floor is a round-down function. modulo is a modulo function.

In a fourth example, if the semi-static resource configuration information carries the identifier offset, and the semi-static resource occurs in the slot, for a 1st slot in the semi-static resource, the 1st slot is divided by the target time domain interval to obtain a seventh value, or the 1st slot is divided by a scheduling cycle of a set of resources in which the 1st slot is located, to obtain a seventh value. A round-down operation is performed on a value obtained by multiplying the seventh value by an adjustment factor, to obtain an eighth value. A value obtained by performing a modulo operation on the eighth value and the preset number of HARQ processes, and the identifier offset are added, to obtain a HARQ process identifier for the 1st slot.

In some embodiments, the fourth example may be implemented by using the following mathematical formula:

$$ID = \left\lfloor \frac{slot}{p} \times Z \right\rfloor \; mod \; K + Offset$$

*ID* is the HARQ process identifier for the 1st slot. *slot* is the 1st slot. *p* is the target time domain interval or the scheduling cycle of the set of resources in which the 1st slot is located. *Z* is the adjustment factor. *K* is the preset number of HARQ processes. ⌊ ⌋ is a round-down operator. *mod* is a modulo operator. *Offset* is the identifier offset.

In some embodiments, the fourth example may be implemented by using the following programming language formula:

HARQ Process ID = [floor (CURRENT_slot × Z / p)] modulo nrofHARQ-Processes + harq-ProcID-Offset

HARQ Process ID is the HARQ process identifier for the 1st slot. CURRENT_slot is the 1st slot. p is the target time domain interval or the scheduling cycle of the set of resources in which the 1st slot is located. Z is the adjustment factor. nrofHARQ-Processes is the preset number of HARQ processes. harq-ProcID-Offset is the identifier offset. floor is a round-down function. modulo is a modulo function.

When the semi-static resource configuration information carries the identifier offset, the terminal needs to consider the identifier offset when determining the HARQ process identifier for the 1st resource in the semi-static resource. Therefore, after the eighth value is obtained based on the 1st slot and the target time domain interval or the scheduling cycle of the set of resources in which the 1st slot is located, the value obtained by performing the modulo operation on the eighth value and the preset number of HARQ processes, and the identifier offset need to be added, to obtain the HARQ process identifier for the 1st slot. In this way, offset of the HARQ process identifier for the 1st slot in the semi-static resource relative to the HARQ process identifier for the another resource is implemented, thereby avoiding a conflict between the HARQ process identifier for the semi-static resource and the HARQ process identifier of the another resource.

It should be noted that in this embodiment of this application, when the HARQ process identifier for the semi-static resource is determined, the concept of the identifier offset may be introduced, or the concept of the identifier offset may not be introduced. In a case in which the concept of the identifier offset is not introduced when the HARQ process identifier for the semi-static resource is determined, that is, the identifier offset does not need to be considered when the HARQ process identifier for the semi-static resource is determined, that is, there is no identifier offset field when the semi-static resource configuration information is defined, if the semi-static resource occurs in the slot, the third example may be directly used to determine the HARQ process identifier for the 1st resource in the semi-static resource. In a case in which the concept of the identifier offset is introduced when the HARQ process identifier for the semi-static resource is determined, that is, the identifier offset needs to be considered when the HARQ process identifier for the semi-static resource is determined, that is, there is an identifier offset field when the semi-static resource configuration information is defined, if the semi-static resource occurs in the slot, the third example may be used to determine the HARQ process identifier for the 1st resource in the semi-static resource when the semi-static resource configuration information does not carry the identifier offset, or the fourth example may be used to determine the HARQ process identifier for the 1st resource in the semi-static resource when the semi-static resource configuration information carries the identifier offset.

In a fifth example, if the semi-static resource occurs at the symbol, for a 1st symbol in the semi-static resource, a round-down operation is performed on a value obtained by dividing the 1st symbol by the target time domain interval, to obtain a ninth value, or a round-down operation is performed on a value obtained by dividing the 1st symbol by a scheduling cycle of a set of resources in which the 1st symbol is located, to obtain a ninth value. A modulo operation is performed on the ninth value and the preset number of HARQ processes to obtain a HARQ process identifier for the 1st symbol.

Optionally, the 1st symbol = a number of slots per frame * a number of symbols per slot * an SFN + a slot number of a slot to which the 1st symbol belongs in a frame * a number of slots per frame + a symbol number of the 1st symbol in the slot.

In some embodiments, the fifth example may be implemented by using the following mathematical formula:

$$ID = \left\lfloor \frac{symbol}{p} \right\rfloor \; mod \; K$$

*ID* is the HARQ process identifier for the 1st symbol. *symbol* is the 1st symbol. *p* is the target time domain interval or the scheduling cycle of the set of resources in which the 1st symbol is located. *K* is the preset number of HARQ processes. $\lfloor \; \rfloor$ is a round-down operator. *mod* is a modulo operator.

In some embodiments, the fifth example may be implemented by using the following programming language formula:

HARQ Process ID = [floor(CURRENT_symbol / p)] modulo nrofHARQ- Processes

HARQ Process ID is the HARQ process identifier for the 1st symbol. CURRENT_symbol is the 1st symbol. p is the target time domain interval or the scheduling cycle of the set of resources in which the 1st symbol is located. nrofHARQ-Processes is the preset number of HARQ processes. floor is a round-down function. modulo is a modulo function.

In a sixth example, if the semi-static resource configuration information carries the identifier offset, and the semi-static resource occurs at the symbol, for a 1st symbol in the semi-static resource, a round-down operation is performed on a value obtained by dividing the 1st symbol by the target time domain interval, to obtain a ninth value, or a round-down operation is performed on a value obtained by dividing the 1st symbol by a scheduling cycle of a set of resources in which the 1st symbol is located, to obtain a ninth value. A value obtained by performing a modulo operation on the ninth value and the preset number of HARQ processes, and the identifier offset are added, to obtain a HARQ process identifier for the 1st symbol.

In some embodiments, the sixth example may be implemented by using the following mathematical formula:

$$ID = \left\lfloor \frac{symbol}{p} \right\rfloor \; mod \; K + Offset$$

*ID* is the HARQ process identifier for the 1st symbol. *symbol* is the 1st symbol. *p* is the target time domain interval or the scheduling cycle of the set of resources in which the 1st symbol is located. *K* is the preset number of HARQ processes. $\lfloor \; \rfloor$ is a round-down operator. *mod* is a modulo operator. *Offset* is the identifier offset.

In some embodiments, the sixth example may be implemented by using the following programming language formula:

HARQ Process ID = [floor(FIRST_symbol / p)] modulo nrofHARQ-Processes + harq-ProcID-Offset

HARQ Process ID is the HARQ process identifier for the 1st symbol. FIRST_symbol is the 1st symbol. p is the target time domain interval or the scheduling cycle of the set of resources in which the 1st symbol is located. nrofHARQ-Processes is the preset number of HARQ processes. harq-ProcID-Offset is the identifier offset. floor is a round-down function. modulo is a modulo function.

When the semi-static resource configuration information carries the identifier offset, the terminal needs to consider the identifier offset when determining the HARQ process identifier for the 1st resource in the semi-static resource. Therefore, after the ninth value is obtained based on the 1st symbol and the target time domain interval or the scheduling cycle of the set of resources in which the 1st symbol is located, the value obtained by performing the modulo operation on the ninth value and the preset number of HARQ processes, and the identifier offset need to be added, to obtain the HARQ process identifier for the 1st symbol. In this way, offset of the HARQ process identifier for the 1st symbol in the semi-static resource relative to the HARQ process identifier for the another resource is implemented, thereby avoiding a conflict between the HARQ process identifier for the semi-static resource and the HARQ process identifier of the another resource.

It should be noted that in this embodiment of this application, when the HARQ process identifier for the semi-static resource is determined, the concept of the identifier offset may be introduced, or the concept of the identifier offset may not be introduced. In a case in which the concept of the identifier offset is not introduced when the HARQ process identifier for the semi-static resource is determined, that is, the identifier offset does not need to be considered when the HARQ process identifier for the semi-static resource is determined, that is, there is no identifier offset field when the semi-static resource configuration information is defined, if the semi-static resource occurs at the symbol, the fifth example may be directly used to determine the HARQ process identifier for the 1st resource in the semi-static resource. In a case in which the concept of the identifier offset is introduced when the HARQ process identifier for the semi-static resource is determined, that is, the identifier offset needs to be considered when the HARQ process identifier for the semi-static resource is determined, that is, there is an identifier offset field when the semi-static resource configuration information is defined, if the semi-static resource occurs at the symbol, the fifth example may be used to determine the HARQ process identifier for the 1st resource in the semi-static resource when the semi-static resource configuration information does not carry the identifier offset, or the sixth example may be used to determine the HARQ process identifier for the 1st resource in the semi-static resource when the semi-static resource configuration information carries the identifier offset.

In this embodiment of this application, the semi-static resource configuration information is received, where the semi-static resource configuration information indicates to configure the semi-static resource, and the semi-static resource includes the plurality of sets of resources. Then, for each resource in each of the plurality of sets of resources in the semi-static resource, the terminal may determine the HARQ process identifier based on the target time domain interval, or may determine the HARQ process identifier based on the target flag value. In this way, the terminal determines HARQ process identifiers for all resources in the semi-static resource in a unified determining manner by using the plurality of sets of resources in the semi-static resource as a whole. Because an independent identifier offset does not need to be introduced to determine a HARQ process identifier for each set of resources in the semi-static resource, not only complexity in determining the HARQ process identifier is reduced, but also efficiency of determining the HARQ process identifier is improved. In addition, a number of HARQ processes required by the semi-static resource can be effectively reduced, so that system capacity can be improved.

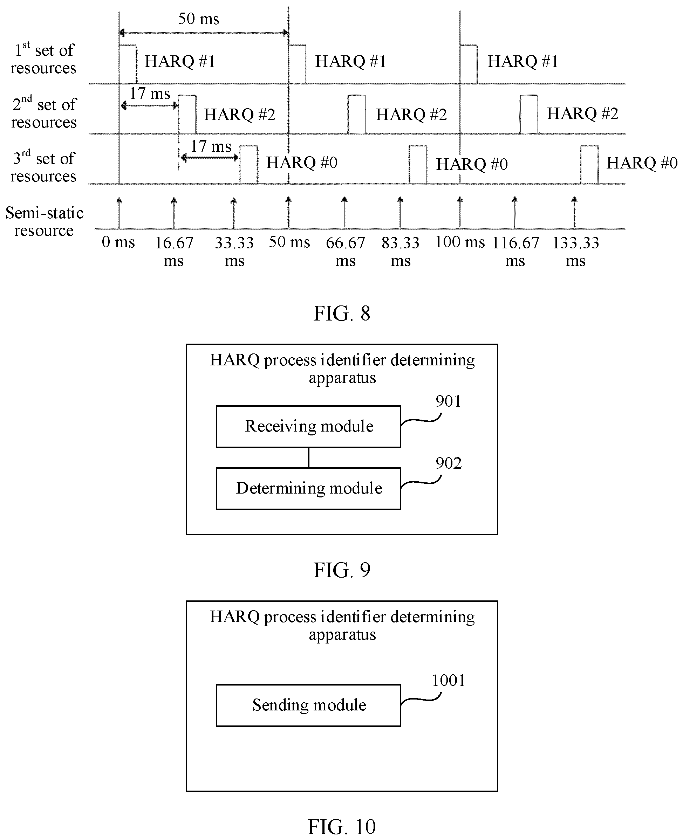

In some embodiments, the HARQ process identifier determining method in the embodiment in FIG. 6 is described by using an example with reference to FIG. 8. The method may include the following step (1) and step (2).

(1) The terminal receives semi-static resource configuration information sent by the base station.
The semi-static resource configuration information indicates to configure a semi-static resource. The semi-static resource includes three sets of resources and a specified HARQ process identifier (that is, a HARQ process identifier for a 1st resource in the semi-static resource) # 1. A preset number 3 of HARQ processes is included. Each set of resources in the three sets of resources has second resource indexes (index 1, index 2, index 3). Resources in each of the three sets of resources have third resource indexes (index 0, index 1, index 2, ...).
(2) The terminal activates the semi-static resource, and after the semi-static resource is activated, determines a HARQ process identifier for each resource in the semi-static resource, to transmit data on each resource in the semi-static resource by using a HARQ process identified by the HARQ process identifier for each resource.

The terminal determines the HARQ process identifier for each resource in the semi-static resource in the following manner.

The HARQ process identifier = (the specified HARQ process identifier + a second index + a number of sets * a third index) modulo the preset number of HARQ processes, where the second index is a second resource index minus 1, and the third index is a third resource index.

When a HARQ process identifier for a 1st resource in a 1st set of resources is 1, HARQ process identifiers determined in the foregoing manner are as follows.

A HARQ process identifier for a 1st resource in a 2nd set of resources is calculated as follows:

$$(1 + 2 - 1 + 3 * 0) \; modulo \; (3) = 2$$

A HARQ process identifier for a 1st resource in a 3rd set of resources is calculated as follows:

$$(1 + 3 - 1 + 3 * 0) \bmod (3) = 0$$

A HARQ process identifier of a 2nd resource in the 1st set of resources is calculated as follows:

$$(1 + 1 - 1 + 3 * 1) \bmod (3) = 1$$

A HARQ process identifier of a 2nd resource in the 2nd set of resources is calculated as follows:

$$(1 + 2 - 1 + 3 * 1) \bmod (3) = 2$$

The rest can be deduced by analogy. The finally obtained HARQ process identifier for each resource in the semi-static resource is shown in FIG. 8.

In some other embodiments, the following describes the HARQ process identifier determining method in the embodiment in FIG. 6 by using an example. The method may include the following step (1) and step (2).

(1) The terminal receives semi-static resource configuration information sent by the base station.
The semi-static resource configuration information indicates to configure a semi-static resource. A scheduling cycle of the semi-static resource is a non-integer scheduling cycle.
(2) The terminal activates the semi-static resource, and determines a slot interval between adjacent resources in the semi-static resource after the semi-static resource is activated.

It is assumed that the slot interval between adjacent resources in the semi-static resource cycles by (17 ms, 17 ms, 16 ms), and a preset number of HARQ processes is 4.

The terminal determines a HARQ process identifier for each resource in the semi-static resource in the following manner.

The HARQ process identifier = [floor (a current slot $\times$ 10/(a number of slots per frame $\times$ a maximum value of slot intervals between adjacent resources in the semi-static resource)] modulo the preset number of HARQ processes

If SCS = 15 kHz, in the semi-static resource, a starting slot of the 1st resource is 5022 (a slot interval is 17 ms), a starting slot of a 2nd resource is 5039 (a slot interval is 17 ms), a starting slot of a 3rd resource is 5055 (a slot interval is 16 ms), a starting slot of a 4th resource is 5072 (a slot interval is 17 ms), a starting slot of a 5th resource is 5089 (a slot interval is 17 ms), a starting slot of a 6th resource is 5105 (a slot interval is 16 ms), and so on. Accordingly, it may be determined that the maximum value of the slot intervals between the adjacent resources in the semi-static resource is 17.

HARQ process identifiers determined in the foregoing manner are as follows:

5022 #3
5039 #0
5055 #1
5072 #2
5089 #3
5105 #0

FIG. 9 is a diagram of a structure of a HARQ process identifier determining apparatus according to an embodiment of this application. The apparatus may be implemented as a part or all of a computer device by using software, hardware, or a combination of software and hardware. The computer device may be the computer device shown in FIG. 4. Refer to FIG. 9. The apparatus includes a receiving module 901 and a determining module 902.

The receiving module 901 is configured to perform step 601 in the embodiment in FIG. 6.

The determining module 902 is configured to perform step 602 or step 603 in the embodiment in FIG. 6.

Optionally, a target time domain interval is an average value, a maximum value, or a minimum value of time domain intervals between adjacent resources in a semi-static resource.

Optionally, the determining module 902 is specifically configured to perform the first possible manner or the second possible manner in step 602 in the embodiment in FIG. 6.

Optionally, the determining module 902 is specifically configured to perform the third possible manner or the fourth possible manner in step 602 in the embodiment in FIG. 6.

Optionally, a target flag value is a preset flag value, and the determining module 902 is specifically configured to perform Manner A or Manner B in step 603 in the embodiment in FIG. 6.

Optionally, a target flag value is a preset flag value, and the determining module 902 is specifically configured to perform Manner C or Manner D in step 603 in the embodiment in FIG. 6.

Optionally, a target flag value is associated with each resource in the semi-static resource, and the target flag value includes a flag value of each resource in the semi-static resource.

Optionally, the flag value of each resource in the semi-static resource is a first index, the first index is a first resource index, or the first index is a value obtained by subtracting 1 from the first resource index, or the first index is a value obtained by adding 1 to the first resource index, and a first resource index of any resource in the semi-static resource indicates the resource in all resources in the semi-static resource.

Alternatively,

the tag value of each resource in the semi-static resource is a value obtained by multiplying a third index by M and then adding a second index, the second index is a second resource index, or the second index is a value obtained by subtracting 1 from a second resource index, or the second index is a value obtained by adding 1 to a second resource index, a second resource index of any resource in the semi-static resource indicates, in a plurality of sets of resources, a set of resources to which the resource belongs, the third index is a third resource index, or the third index is a value obtained by subtracting 1 from a third resource index, or the third index is a value obtained by adding 1 to a third resource index, a third resource index of the resource indicates the resource in a plurality of resources in the set of resources to which the resource belongs, and M is a number of the plurality of sets of resources.

Optionally, the determining module 902 is specifically configured to perform Manner 1 or Manner 2 in step 603 in the embodiment in FIG. 6.

Optionally, the determining module 902 is specifically configured to perform Manner 3 in step 603 in the embodiment in FIG. 6.

Optionally, the determining module 902 is specifically configured to perform Manner (1) or Manner (2) in step 603 in the embodiment in FIG. 6.

Optionally, the determining module 902 is specifically configured to:

receive indication information, where the indication information carries a specified HARQ process identifier, and the indication information is RRC information, MAC CE information, or DCI.

Optionally, the specified HARQ process identifier is a preset identifier.

Optionally, the determining module 902 is specifically configured to:

if the semi-static resource occurs in a slot, for a $1^{st}$ slot in the semi-static resource, divide the $1^{st}$ slot by the target time domain interval to obtain a seventh value, or divide the $1^{st}$ slot by a scheduling cycle of a set of resources in which the $1^{st}$ symbol is located, to obtain a seventh value;

perform a round-down operation on a value obtained by multiplying the seventh value by an adjustment factor, to obtain an eighth value; and

perform a modulo operation on the eighth value and a preset number of HARQ processes to obtain a HARQ process identifier for the $1^{st}$ slot; or if semi-static resource configuration information carries an identifier offset, add a value obtained by performing a modulo operation on the eighth value and a preset number of HARQ processes, and the identifier offset, to obtain a HARQ process identifier for the $1^{st}$ slot.

Optionally, the determining module 902 is specifically configured to:

if the semi-static resource occurs at a symbol, for a $1^{st}$ symbol in the semi-static resource, perform a round-down operation on a value obtained by dividing the $1^{st}$ symbol by the target time domain interval, to obtain a ninth value, or perform a round-down operation on a value obtained by dividing the $1^{st}$ symbol by a scheduling cycle of a set of resources in which the $1^{st}$ symbol is located, to obtain a ninth value; and

perform a modulo operation on the ninth value and a preset number of HARQ processes to obtain a HARQ process identifier for the $1^{st}$ symbol; or if semi-static resource configuration information carries an identifier offset, add a value obtained by performing a modulo operation on the ninth value and a preset number of HARQ processes, and the identifier offset, to obtain a HARQ process identifier for the $1^{st}$ symbol.

In this embodiment of this application, the semi-static resource configuration information is received, where the semi-static resource configuration information indicates to configure the semi-static resource, and the semi-static resource includes the plurality of sets of resources. Then, for each resource in each of the plurality of sets of resources in the semi-static resource, a terminal may determine a HARQ process identifier based on the target time domain interval, or may determine a HARQ process identifier based on the target flag value. In this way, the terminal determines HARQ process identifiers for all resources in the semi-static resource in a unified determining manner by using the plurality of sets of resources in the semi-static resource as a whole. Because an independent identifier offset does not need to be introduced to determine a HARQ process identifier for each set of resources in the semi-static resource, not only complexity in determining the HARQ process identifier is reduced, but also efficiency of determining the HARQ process identifier is improved. In addition, a number of HARQ processes required by the semi-static resource can be effectively reduced, so that system capacity can be improved.

FIG. 10 is a diagram of a structure of a HARQ process identifier determining apparatus according to an embodiment of this application. The apparatus may be implemented as a part or all of a computer device by using software, hardware, or a combination of software and hardware. The computer device may be the computer device shown in FIG. 5. Refer to FIG. 10. The apparatus includes a sending module 1001.

The sending module 1001 is configured to send HARQ process identifier configuration information, where the HARQ process identifier configuration information includes a determining rule for a target time domain interval between adjacent resources in a semi-static resource, or the HARQ process identifier configuration information includes a target flag value, the semi-static resource includes a plurality of resources, the target time domain interval or the target flag value is used to determine a HARQ process identifier for each resource in the semi-static resource, and the target flag value is associated with each resource in the semi-static resource, or the target flag value is a preset flag value.

Optionally, the determining rule for the target time domain interval is using an average value, a maximum value, or a minimum value of time domain intervals between adjacent resources in the semi-static resource as the target time domain interval.

Optionally, the target flag value is the preset flag value, the HARQ process identifier configuration information includes a preset increment, and the preset flag value and the preset increment are used to determine the HARQ process identifier for each resource in the semi-static resource.

Optionally, the target flag value is the preset flag value, and the HARQ process identifier configuration information includes a preset increment. The sending module 1001 is further configured to:

send a specified HARQ process identifier, where the specified HARQ process identifier is a HARQ process identifier for a 1st resource in the semi-static resource, the specified HARQ process identifier, the preset flag value, and the preset increment are used to determine a HARQ process identifier for a target resource, and the target resource is another resource other than the 1st resource in the semi-static resource.

Optionally, the target flag value is associated with each resource in the semi-static resource, and the target flag value includes a flag value of each resource in the semi-static resource.

The flag value of each resource in the semi-static resource is a first index, the first index is a first resource index, or the first index is a value obtained by subtracting 1 from the first resource index, or the first index is a value obtained by adding 1 to the first resource index, and a first resource index of any resource in the semi-static resource indicates the resource in all resources in the semi-static resource. Alternatively, the tag value of each resource in the semi-static resource is a value obtained by multiplying a third index by M and then adding a second index, the second index is a second resource index, or the second index is a value obtained by subtracting 1 from a second resource index, or the second index is a value obtained by adding 1 to a second resource index, a second resource index of any resource in the semi-static resource indicates, in the plurality of sets of resources, a set of resources to which the resource belongs, the third index is a third resource index, or the third index is a value obtained by subtracting 1 from a third resource index, or the third index is a value obtained by adding 1 to a third resource index, a third resource index of the resource indicates the resource in a plurality of resources in the set of resources to which the resource belongs, and M is a number of the plurality of sets of resources.

Optionally, the sending module 1001 is further configured to:

send a specified HARQ process identifier, where the specified HARQ process identifier is a HARQ process identifier for a 1st resource in the semi-static resource, the specified HARQ process identifier and a flag value of a target resource are used to determine a HARQ process identifier for the target resource, and the target resource is another resource other than the 1st resource in the semi-static resource.

Optionally, the specified HARQ process identifier is carried in indication information, and the indication information is RRC information, MAC CE information, or DCI.

Optionally, the HARQ process identifier configuration information carries an identifier offset. The identifier offset is an offset between a HARQ process identifier for the semi-static resource and a HARQ process identifier for another resource. The target time domain interval and the identifier offset are used to determine the HARQ process identifier for each resource in the semi-static resource. Alternatively, the target flag value and the identifier offset are used to determine the HARQ process identifier for each resource in the semi-static resource.

In this embodiment of this application, the HARQ process identifier configuration information is sent, where the HARQ process identifier configuration information includes the determining rule of the target time domain interval between adjacent resources in the semi-static resource, or the HARQ process identifier configuration information includes the target flag value, and the semi-static resource includes the plurality of sets of resources. For each resource in each of the plurality of sets of resources in the semi-static resource, a HARQ process identifier may be determined based on the determined target time domain interval, or a HARQ process identifier may be determined based on the target flag value. In this way, HARQ process identifiers for all resources in the semi-static resource are determined in a unified determining manner by using the plurality of sets of resources in the semi-static resource as a whole. Because an independent identifier offset does not need to be introduced to determine a HARQ process identifier for each set of resources in the semi-static resource, not only complexity in determining the HARQ process identifier is reduced, but also efficiency of determining the HARQ process identifier is improved. In addition, a number of HARQ processes required by the semi-static resource can be effectively reduced, so that system capacity can be improved.

It should be noted that when the HARQ process identifier determining apparatus provided in the foregoing embodiment determines the HARQ process identifier, division of the foregoing functional modules is merely used as an example for description. In actual application, the foregoing functions may be allocated to different functional modules for implementation based on a requirement, that is, an inner structure of the apparatus is divided into different functional modules to implement all or some of the functions described above.

The functional units and modules in the foregoing embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely intended to be easily distinguished from each other, and are not intended to limit the protection scope of embodiments of this application.

The HARQ process identifier determining apparatus provided in the foregoing embodiment belongs to a same concept as the HARQ process identifier determining method embodiment. For a specific working process and technical effects of the units and the modules in the foregoing embodiment, refer to the method embodiment. Details are not described herein again.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device such as a server or a data center integrating one or more usable media. The usable medium may be a magnetic medium (for example, a floppy disk, a hard disk, or a magnetic tape), an optical medium (for example, a digital versatile disc (Digital Versatile Disc, DVD), a semiconductor medium (for example, a solid state disk (Solid State Disk, SSD)), or the like.

The foregoing descriptions are optional embodiments provided in this application, but are not intended to limit this application. Any modification, equivalent replacement, improvement, or the like made within the technical scope disclosed in this application shall fall within the protection scope of this application.

**Claims**

1. A HARQ process identifier determining method, wherein the method comprises:

   receiving semi-static resource configuration information, wherein the semi-static resource configuration information indicates to configure a semi-static resource; and
   determining a hybrid automatic repeat request HARQ process identifier for each resource in the semi-static resource based on a target time domain interval between adjacent resources in the semi-static resource; or determining a HARQ process identifier for each resource in the semi-static resource based on a target flag value, wherein the target flag value is associated with each resource in the semi-static resource; or determining a HARQ process identifier for each resource in the semi-static resource based on a target time domain interval between adjacent resources in the semi-static resource and a target flag value, wherein the target flag value is associated with each resource in the semi-static resource.

2. The method according to claim 1, wherein the semi-static resource comprises a plurality of resources, there are M resources in each cycle of the semi-static resource, and M is an integer greater than or equal to 2.

3. The method according to claim 2, wherein the semi-static resource comprises M sets of resources.

4. The method according to any one of claims 1 to 3, wherein the target time domain interval is an average value, a maximum value, or a minimum value of time domain intervals between adjacent resources in the semi-static resource.

5. The method according to any one of claims 1 to 4, wherein the determining a hybrid automatic repeat request HARQ process identifier for each resource in the semi-static resource based on a target time domain interval between adjacent resources in the semi-static resource comprises:

if the semi-static resource occurs in a slot, dividing a current slot in the semi-static resource by the target time domain interval to obtain a first value;
performing a round-down operation on a value obtained by multiplying the first value by an adjustment factor, to obtain a second value; and
performing a modulo operation on the second value and a preset number of HARQ processes to obtain a HARQ process identifier for a current resource in the semi-static resource; or if the semi-static resource configuration information carries an identifier offset, adding a value obtained by performing a modulo operation on the second value and a preset number of HARQ processes, and the identifier offset, to obtain a HARQ process identifier for the current resource, wherein the identifier offset is an offset between a HARQ process identifier for the semi-static resource and a HARQ process identifier for another resource.

6. The method according to any one of claims 1 to 4, wherein the determining a hybrid automatic repeat request HARQ process identifier for each resource in the semi-static resource based on a target time domain interval between adjacent resources in the semi-static resource comprises:

if the semi-static resource occurs at a symbol, performing a round-down operation on a value obtained by dividing a current symbol in the semi-static resource by the target time domain interval, to obtain a third value; and
performing a modulo operation on the third value and a preset number of HARQ processes to obtain a HARQ process identifier for a current resource in the semi-static resource; or if the semi-static resource configuration information carries an identifier offset, adding a value obtained by performing a modulo operation on the third value and a preset number of HARQ processes, and the identifier offset, to obtain a HARQ process identifier for the current resource.

7. The method according to any one of claims 1 to 3, wherein the target flag value comprises a flag value of each resource in the semi-static resource, a flag value of a 1st resource in the semi-static resource is 0, and flag values of all resources in the semi-static resource sequentially increase by a preset increasing amount.

8. The method according to any one of claims 1 to 3, wherein the target flag value comprises a flag value of each resource in the semi-static resource; and
the flag value of each resource in the semi-static resource is a first index, the first index is a first resource index, or the first index is a value obtained by subtracting 1 from a first resource index, or the first index is a value obtained by adding 1 to a first resource index, and a first resource index of any resource in the semi-static resource indicates the resource in all resources in the semi-static resource.

9. The method according to any one of claims 1 to 3, wherein the target flag value comprises a flag value of each resource in the semi-static resource, the flag value of each resource in the semi-static resource is determined based on one or more of M, a second index, and a third index, and M is a number of resources in each cycle of the semi-static resource;

the second index is a second resource index, or the second index is a value obtained by subtracting 1 from a second resource index, or the second index is a value obtained by adding 1 to a second resource index, and a second resource index of the semi-static resource indicates a resource in M resources in a cycle in which the resource is located; and
the third index is a third resource index, or the third index is a value obtained by subtracting 1 from a third resource index, or the third index is a value obtained by adding 1 to a third resource index, and a third resource index of the semi-static resource indicates, in all cycles of the semi-static resource, a cycle in which a resource is located.

10. The method according to claim 9, wherein the second index is an integer greater than or equal to 0 and less than or equal to M-1, or the second index is an integer greater than or equal to 1 and less than or equal to M.

11. The method according to claim 9 or 10, wherein the flag value of each resource in the semi-static resource is a value obtained by multiplying the third index by M and then adding the second index.

12. The method according to any one of claims 7 to 11, wherein the determining a HARQ process identifier for each resource in the semi-static resource based on a target flag value comprises:

   for a current resource in the semi-static resource, performing a modulo operation on a flag value of the current resource and a preset number of HARQ processes to obtain a HARQ process identifier for the current resource, wherein the current resource is a current slot or a current symbol;
   or
   if the semi-static resource configuration information carries an identifier offset, for a current resource in the semi-static resource, adding a value obtained by performing a modulo operation on a flag value of the current resource and a preset number of HARQ processes, and the identifier offset, to obtain a HARQ process identifier for the current resource.

13. The method according to any one of claims 1 to 3 and 7 to 11, wherein the determining a HARQ process identifier for each resource in the semi-static resource based on a target flag value comprises:
   determining the HARQ process identifier for each resource in the semi-static resource based on the target flag value and a target value, wherein the target value is determined based on the cycle of the semi-static resource.

14. The method according to claim 13, wherein the target value is obtained by dividing a $1^{st}$ slot, a current slot, a $1^{st}$ symbol, or a current symbol in the semi-static resource by the cycle of the semi-static resource.

15. The method according to claim 13 or 14, wherein the determining the HARQ process identifier for each resource in the semi-static resource based on the target flag value and a target value comprises:

   if the semi-static resource occurs in a slot, performing a round-down operation on a value obtained by multiplying the target value by an adjustment factor, to obtain an eighth value, and determining the HARQ process identifier for each resource in the semi-static resource based on the eighth value and the target flag value, wherein the target value is obtained by dividing the $1^{st}$ slot or the current slot in the semi-static resource by the cycle of the semi-static resource; or
   if the semi-static resource occurs at a symbol, performing a round-down operation on the target value to obtain a ninth value, and determining the HARQ process identifier for each resource in the semi-static resource based on the ninth value and the target flag value, wherein the target value is obtained by dividing the $1^{st}$ symbol or the current symbol in the semi-static resource by the cycle of the semi-static resource.

16. The method according to claim 15, wherein the determining the HARQ process identifier for each resource in the semi-static resource based on the eighth value and the target flag value comprises:

   obtaining a specified HARQ process identifier based on the eighth value, wherein the specified HARQ process identifier is a HARQ process identifier for the $1^{st}$ resource in the semi-static resource; and
   for a target resource other than the $1^{st}$ resource in the semi-static resource, determining a HARQ process identifier for the target resource based on the specified HARQ process identifier and the target flag value.

17. The method according to claim 16, wherein the obtaining a specified HARQ process identifier based on the eighth value comprises:

   performing a modulo operation on the eighth value and a preset number of HARQ processes to obtain the specified HARQ process identifier; or
   if the semi-static resource configuration information carries an identifier offset, adding a value obtained by performing a modulo operation on the eighth value and a preset number of HARQ processes, and the identifier offset, to obtain the specified HARQ process identifier.

18. The method according to claim 15, wherein the determining the HARQ process identifier for each resource in the semi-static resource based on the ninth value and the target flag value comprises:

   obtaining a specified HARQ process identifier based on the ninth value, wherein the specified HARQ process identifier is a HARQ process identifier for the $1^{st}$ resource in the semi-static resource; and

for a target resource other than the 1st resource in the semi-static resource, determining a HARQ process identifier for the target resource based on the specified HARQ process identifier and the target flag value.

19. The method according to claim 18, wherein the obtaining a specified HARQ process identifier based on the ninth value comprises:

performing a modulo operation on the ninth value and a preset number of HARQ processes to obtain the specified HARQ process identifier; or
if the semi-static resource configuration information carries an identifier offset, adding a value obtained by performing a modulo operation on the ninth value and a preset number of HARQ processes, and the identifier offset, to obtain the specified HARQ process identifier.

20. The method according to any one of claims 1 to 3 and 7 to 11, wherein the determining a HARQ process identifier for each resource in the semi-static resource based on a target flag value comprises:

obtaining a specified HARQ process identifier, wherein the specified HARQ process identifier is a HARQ process identifier for the 1st resource in the semi-static resource; and
for a target resource other than the 1st resource in the semi-static resource, determining a HARQ process identifier for the target resource based on the specified HARQ process identifier and the target flag value.

21. The method according to any one of claims 1 to 4 and 7 to 11, wherein the determining a HARQ process identifier for each resource in the semi-static resource based on a target time domain interval between adjacent resources in the semi-static resource and a target flag value comprises:

obtaining a specified HARQ process identifier based on the target time domain interval, wherein the specified HARQ process identifier is a HARQ process identifier for the 1st resource in the semi-static resource; and
for a target resource other than the 1st resource in the semi-static resource, determining a HARQ process identifier for the target resource based on the specified HARQ process identifier and the target flag value.

22. The method according to claim 21, wherein the obtaining a specified HARQ process identifier based on the target time domain interval comprises:

if the semi-static resource occurs in a slot, dividing a 1st slot or a current slot in the semi-static resource by the target time domain interval to obtain a seventh value;
performing a round-down operation on a value obtained by multiplying the seventh value by an adjustment factor, to obtain an eighth value; and
performing a modulo operation on the eighth value and a preset number of HARQ processes to obtain the specified HARQ process identifier; or if the semi-static resource configuration information carries an identifier offset, adding a value obtained by performing a modulo operation on the eighth value and a preset number of HARQ processes, and the identifier offset, to obtain the specified HARQ process identifier.

23. The method according to claim 21, wherein the obtaining a specified HARQ process identifier based on the target time domain interval comprises:

if the semi-static resource occurs at a symbol, performing a round-down operation on a value obtained by dividing a 1st symbol or a current symbol in the semi-static resource by the target time domain interval, to obtain a ninth value; and
performing a modulo operation on the ninth value and a preset number of HARQ processes to obtain the specified HARQ process identifier; or if the semi-static resource configuration information carries an identifier offset, adding a value obtained by performing a modulo operation on the ninth value and a preset number of HARQ processes, and the identifier offset, to obtain the specified HARQ process identifier.

24. The method according to any one of claims 16 to 23, wherein the target flag value comprises the flag value of each resource in the semi-static resource, and the determining a HARQ process identifier for the target resource based on the specified HARQ process identifier and the target flag value comprises:

adding the specified HARQ process identifier and a flag value of the target resource to obtain a sixth value, and performing a modulo operation on the sixth value and the preset number of HARQ processes to obtain the HARQ process identifier for the target resource;
or
if the semi-static resource configuration information carries the identifier offset, adding the specified HARQ process identifier and a flag value of the target resource to obtain a sixth value, and adding a value obtained by performing a modulo operation on the sixth value and the preset number of HARQ processes, and the identifier offset, to obtain the HARQ process identifier for the target resource.

25. A HARQ process identifier determining method, wherein the method comprises:
sending hybrid automatic repeat request HARQ process identifier configuration information, wherein the HARQ process identifier configuration information comprises a determining rule for a target time domain interval between adjacent resources in a semi-static resource, and/or the HARQ process identifier configuration information comprises a target flag value, the target time domain interval and/or the target flag value are/is used to determine a HARQ process identifier for each resource in the semi-static resource, and the target flag value is associated with each resource in the semi-static resource.

26. The method according to claim 25, wherein the semi-static resource comprises a plurality of resources, there are M resources in each cycle of the semi-static resource, and M is an integer greater than or equal to 2.

27. The method according to claim 26, wherein the semi-static resource comprises M sets of resources.

28. The method according to any one of claims 25 to 27, wherein the determining rule for the target time domain interval is: using an average value, a maximum value, or a minimum value of time domain intervals between adjacent resources in the semi-static resource as the target time domain interval.

29. The method according to any one of claims 25 to 27, wherein the target flag value comprises a flag value of each resource in the semi-static resource, a flag value of a 1st resource in the semi-static resource is 0, and flag values of all resources in the semi-static resource sequentially increase by a preset increasing amount.

30. The method according to any one of claims 25 to 27, wherein the target flag value comprises a flag value of each resource in the semi-static resource; and
the flag value of each resource in the semi-static resource is a first index, the first index is a first resource index, or the first index is a value obtained by subtracting 1 from a first resource index, or the first index is a value obtained by adding 1 to a first resource index, and a first resource index of any resource in the semi-static resource indicates the resource in all resources in the semi-static resource.

31. The method according to any one of claims 25 to 27, wherein the target flag value comprises a flag value of each resource in the semi-static resource, the flag value of each resource in the semi-static resource is determined based on one or more of M, a second index, and a third index, and M is a number of resources in each cycle of the semi-static resource;

the second index is a second resource index, or the second index is a value obtained by subtracting 1 from a second resource index, or the second index is a value obtained by adding 1 to a second resource index, and a second resource index of the semi-static resource indicates a resource in M resources in a cycle in which the resource is located; and
the third index is a third resource index, or the third index is a value obtained by subtracting 1 from a third resource index, or the third index is a value obtained by adding 1 to a third resource index, and a third resource index of the semi-static resource indicates, in all cycles of the semi-static resource, a cycle in which a resource is located.

32. The method according to claim 31, wherein the second index is an integer greater than or equal to 0 and less than or equal to M-1, or the second index is an integer greater than or equal to 1 and less than or equal to M.

33. The method according to claim 31 or 32, wherein the flag value of each resource in the semi-static resource is a value obtained by multiplying the third index by M and then adding the second index.

34. The method according to any one of claims 25 to 33, wherein the HARQ process identifier configuration information carries an identifier offset, and the identifier offset is an offset between a HARQ process identifier for the semi-static resource and a HARQ process identifier for another resource; and
the target time domain interval and the identifier offset are used to determine the HARQ process identifier for each resource in the semi-static resource, or the target flag value and the identifier offset are used to determine the HARQ process identifier for each resource in the semi-static resource, or the target time domain interval, the target flag value, and the identifier offset are used to determine the HARQ process identifier for each resource in the semi-static resource.

35. A HARQ process identifier determining method, wherein the method comprises:

receiving semi-static resource configuration information, wherein the semi-static resource configuration information indicates to configure a semi-static resource; and
determining a hybrid automatic repeat request HARQ process identifier for each resource in the semi-static resource based on a target time domain interval between adjacent resources in the semi-static resource; or determining a HARQ process identifier for each resource in the semi-static resource based on a target flag value, wherein the target flag value is associated with each resource in the semi-static resource, or the target flag value is a preset flag value.

36. The method according to claim 35, wherein the semi-static resource comprises a plurality of sets of resources.

37. The method according to claim 35 or 36, wherein the target flag value is the preset flag value, and the determining a HARQ process identifier for each resource in the semi-static resource based on a target flag value comprises:

for a current resource in the semi-static resource, adding the preset flag value and at least one preset increment to obtain a fourth value, and performing a modulo operation on the fourth value and a preset number of HARQ processes to obtain a HARQ process identifier for the current resource, wherein the current resource is a current slot or a current symbol;
or
if the semi-static resource configuration information carries an identifier offset, for a current resource in the semi-static resource, adding the preset flag value and at least one preset increment to obtain a fourth value, and adding a value obtained by performing a modulo operation on the fourth value and a preset number of HARQ processes, and the identifier offset, to obtain a HARQ process identifier for the current resource, wherein the current resource is a current slot or a current symbol.

38. The method according to claim 35 or 36, wherein the target flag value is the preset flag value, and the determining a HARQ process identifier for each resource in the semi-static resource based on a target flag value comprises:

obtaining a specified HARQ process identifier, wherein the specified HARQ process identifier is a HARQ process identifier for a 1st resource in the semi-static resource; and
for a target resource other than the 1st resource in the semi-static resource, adding the specified HARQ process identifier, the preset flag value, and at least one preset increment to obtain a fifth value, and performing a modulo operation on the fifth value and a preset number of HARQ processes to obtain a HARQ process identifier for the target resource; or if the semi-static resource configuration information carries an identifier offset, for a target resource other than the 1st resource in the semi-static resource, adding the specified HARQ process identifier, the preset flag value, and at least one preset increment to obtain a fifth value, and adding a value obtained by performing a modulo operation on the fifth value and a preset number of HARQ processes, and the identifier offset, to obtain a HARQ process identifier for the target resource.

39. The method according to claim 35 or 36, wherein the target flag value is associated with each resource in the semi-static resource, and the target flag value comprises a flag value of each resource in the semi-static resource; and the flag value of each resource in the semi-static resource is a first index, the first index is a first resource index, or the first index is a value obtained by subtracting 1 from a first resource index, or the first index is a value obtained by adding 1 to a first resource index, and a first resource index of any resource in the semi-static resource indicates the resource in all resources in the semi-static resource; or the tag value of each resource in the semi-static resource is a value obtained by multiplying a third index by M and then adding a second index, the second index is a second resource index, or the second index is a value obtained by subtracting 1 from a second resource index, or the second index is a value obtained by adding 1 to a second resource index, a second resource index of any resource in the semi-static resource indicates, in the plurality of sets of resources, a set of resources to which the resource belongs, the third index is a third resource index, or the third index is a value obtained by subtracting 1 from a third resource index, or the third index is a value obtained by adding 1 to a third resource index, a third resource index of the resource indicates the resource in a plurality of resources in the set of resources to which the resource belongs, and M is a number of the plurality of sets of resources comprised in the semi-static resource.

40. The method according to claim 39, wherein the determining a HARQ process identifier for each resource in the semi-static resource based on a target flag value comprises:

for a current resource in the semi-static resource, performing a modulo operation on a flag value of the current resource and a preset number of HARQ processes to obtain a HARQ process identifier for the current resource, wherein the current resource is a current slot or a current symbol;
or
if the semi-static resource configuration information carries an identifier offset, for a current resource in the semi-static resource, adding a value obtained by performing a modulo operation on a flag value of the current resource and a preset number of HARQ processes, and the identifier offset, to obtain a HARQ process identifier for the current resource.

41. The method according to claim 39, wherein the determining a HARQ process identifier for each resource in the semi-static resource based on a target flag value comprises:

obtaining a specified HARQ process identifier, wherein the specified HARQ process identifier is a HARQ process identifier for a 1st resource in the semi-static resource; and
for a target resource other than the 1st resource in the semi-static resource, determining a HARQ process identifier for the target resource based on the specified HARQ process identifier and a flag value of the target resource.

42. The method according to claim 41, wherein the determining a HARQ process identifier for the target resource based on the specified HARQ process identifier and a flag value of the target resource comprises:

adding the specified HARQ process identifier and the flag value of the target resource to obtain a sixth value, and performing a modulo operation on the sixth value and a preset number of HARQ processes to obtain the HARQ process identifier for the target resource;
or
if the semi-static resource configuration information carries an identifier offset, adding the specified HARQ process identifier and the flag value of the target resource to obtain a sixth value, and adding a value obtained by performing a modulo operation on the sixth value and a preset number of HARQ processes, and the identifier offset, to obtain the HARQ process identifier for the target resource.

43. The method according to claim 41 or 42, wherein the obtaining a specified HARQ process identifier comprises:
receiving indication information, wherein the indication information carries the specified HARQ process identifier, and the indication information is radio resource control RRC information, media access control control unit MAC CE information, or downlink control information DCI.

44. The method according to claim 41 or 42, wherein the specified HARQ process identifier is a preset identifier.

45. The method according to claim 41 or 42, wherein the obtaining a specified HARQ process identifier comprises:

if the semi-static resource occurs in a slot, for a 1st slot in the semi-static resource, dividing the 1st slot by the target time domain interval to obtain a seventh value, or when the semi-static resource comprises the plurality of sets of resources, dividing the 1st slot by a scheduling cycle of a set of resources in which the 1st symbol is located, to obtain a seventh value;
performing a round-down operation on a value obtained by multiplying the seventh value by an adjustment factor, to obtain an eighth value; and
performing a modulo operation on the eighth value and a preset number of HARQ processes to obtain the specified HARQ process identifier; or if the semi-static resource configuration information carries an identifier offset, adding a value obtained by performing a modulo operation on the eighth value and a preset number of HARQ processes, and the identifier offset, to obtain the specified HARQ process identifier.

46. The method according to claim 41 or 42, wherein the obtaining a specified HARQ process identifier comprises:

if the semi-static resource occurs at a symbol, for a 1st symbol in the semi-static resource, performing a round-down operation on a value obtained by dividing the 1st symbol by the target time domain interval, to obtain a ninth value, or when the semi-static resource comprises the plurality of sets of resources, performing a round-down operation on a value obtained by dividing the 1st symbol by a scheduling cycle of a set of resources in which the 1st symbol is located, to obtain a ninth value; and

performing a modulo operation on the ninth value and a preset number of HARQ processes to obtain the specified HARQ process identifier; or if the semi-static resource configuration information carries an identifier offset, adding a value obtained by performing a modulo operation on the ninth value and a preset number of HARQ processes, and the identifier offset, to obtain the specified HARQ process identifier.

47. A HARQ process identifier determining method, wherein the method comprises:
sending hybrid automatic repeat request HARQ process identifier configuration information, wherein the HARQ process identifier configuration information comprises a determining rule for a target time domain interval between adjacent resources in a semi-static resource, or the HARQ process identifier configuration information comprises a target flag value, the target time domain interval or the target flag value is used to determine a HARQ process identifier for each resource in the semi-static resource, and the target flag value is associated with each resource in the semi-static resource, or the target flag value is a preset flag value.

48. The method according to claim 47, wherein the semi-static resource comprises a plurality of sets of resources.

49. The method according to claim 47 or 48, wherein the target flag value is the preset flag value, the HARQ process identifier configuration information comprises a preset increment, and the preset flag value and the preset increment are used to determine the HARQ process identifier for each resource in the semi-static resource.

50. The method according to claim 47 or 48, wherein the target flag value is the preset flag value, the HARQ process identifier configuration information comprises a preset increment, and the method further comprises:
sending a specified HARQ process identifier, wherein the specified HARQ process identifier is a HARQ process identifier for a 1st resource in the semi-static resource, the specified HARQ process identifier, the preset flag value, and the preset increment are used to determine a HARQ process identifier for the target resource, and the target resource is another resource other than the 1st resource in the semi-static resource.

51. The method according to claim 47 or 48, wherein the target flag value is associated with each resource in the semi-static resource, and the target flag value comprises a flag value of each resource in the semi-static resource; and the flag value of each resource in the semi-static resource is a first index, the first index is a first resource index, or the first index is a value obtained by subtracting 1 from a first resource index, or the first index is a value obtained by adding 1 to a first resource index, and a first resource index of any resource in the semi-static resource indicates the resource in all resources in the semi-static resource; or the tag value of each resource in the semi-static resource is a value obtained by multiplying a third index by M and then adding a second index, the second index is a second resource index, or the second index is a value obtained by subtracting 1 from a second resource index, or the second index is a value obtained by adding 1 to a second resource index, a second resource index of any resource in the semi-static resource indicates, in the plurality of sets of resources, a set of resources to which the resource belongs, the third index is a third resource index, or the third index is a value obtained by subtracting 1 from a third resource index, or the third index is a value obtained by adding 1 to a third resource index, a third resource index of the resource indicates the resource in a plurality of resources in the set of resources to which the resource belongs, and M is a number of the plurality of sets of resources comprised in the semi-static resource.

52. The method according to claim 51, wherein the method further comprises:
sending a specified HARQ process identifier, wherein the specified HARQ process identifier is a HARQ process identifier for a 1st resource in the semi-static resource, the specified HARQ process identifier and a flag value of a target resource are used to determine a HARQ process identifier for the target resource, and the target resource is another resource other than the 1st resource in the semi-static resource.

53. The method according to claim 50 or 52, wherein the specified HARQ process identifier is carried in indication information, and the indication information is radio resource control RRC information, media access control control unit MAC CE information, or downlink control information DCI.

54. A HARQ process identifier determining apparatus, wherein the apparatus comprises:

a receiving module, configured to receive semi-static resource configuration information, wherein the semi-static resource configuration information indicates to configure a semi-static resource; and
a determining module, configured to: determine a hybrid automatic repeat request HARQ process identifier for each resource in the semi-static resource based on a target time domain interval between adjacent resources in the semi-static resource; or determine a HARQ process identifier for each resource in the semi-static resource based on a target flag value, wherein the target flag value is associated with each resource in the semi-static resource, or the target flag value is a preset flag value.

55. A HARQ process identifier determining apparatus, wherein the apparatus comprises:
a sending module, configured to send hybrid automatic repeat request HARQ process identifier configuration information, wherein the HARQ process identifier configuration information comprises a determining rule for a target time domain interval between adjacent resources in a semi-static resource, or the HARQ process identifier configuration information comprises a target flag value, the target time domain interval or the target flag value is used to determine a HARQ process identifier for each resource in the semi-static resource, and the target flag value is associated with each resource in the semi-static resource, or the target flag value is a preset flag value.

56. A computer device, wherein the computer device comprises a memory, a processor, and a computer program stored in the memory and runnable on the processor, and when the computer program is executed by the processor, the method according to any one of claims 1 to 24 and 35 to 46 is implemented.

57. A computer device, wherein the computer device comprises a memory, a processor, and a computer program stored in the memory and runnable on the processor, and when the computer program is executed by the processor, the method according to any one of claims 25 to 34 and 47 to 53 is implemented.

58. A computer-readable storage medium, wherein the computer-readable storage medium stores instructions, and when the instructions are run on a computer, the computer is enabled to perform the method according to any one of claims 1 to 24 and 35 to 46.

59. A computer-readable storage medium, wherein the computer-readable storage medium stores instructions, and when the instructions are run on a computer, the computer is enabled to perform the method according to any one of claims 25 to 34 and 47 to 53.

FIG. 1

FIG. 2

302

Base station

301

Terminal

FIG. 3

401

Processor

CPU 0

CPU 1

405

Processor

CPU 0

CPU 1

403

Memory

410

Program
code

Communication
bus

402

404

Communication
interface

406

Output
device

407

Input
device

FIG. 4

501          505

Processor      Processor

CPU 0        CPU 0

CPU 1        CPU 1

503

Communication bus  502

Memory  510

Program code

504

Communication interface

FIG. 5

A terminal receives semi-static resource configuration information  601

The terminal determines a HARQ process identifier for each resource in a semi-static resource based on a target time domain interval between adjacent resources in the semi-static resource  602

The terminal determines a HARQ process identifier for each resource in a semi-static resource based on a target flag value  603

FIG. 6

FIG. 7

FIG. 8

FIG. 9

FIG. 10

## INTERNATIONAL SEARCH REPORT

| International application No. |
| --- |
| **PCT/CN2023/119867** |

| | |
| --- | --- |
| **A.    CLASSIFICATION OF SUBJECT MATTER** | |
| H04L1/18(2023.01)i | |
| According to International Patent Classification (IPC) or to both national classification and IPC | |

**B.    FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNKI, IEEE, CNTXT, DWPI, ENTXT, ENTXTC, VEN: 半持续, 半静态, 混合自动重传, 进程, 编号, 标记, 标识, 间隔, 邻, 时隙, HARQ, SPS, modulo, periodicity, slot, XR, process, ID

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111510260 A (OPPO GUANGDONG MOBILE TELECOMMUNICATIONS CORP., LTD.) 07 August 2020 (2020-08-07) description, paragraphs [0092]-[0214] | 1-59 |
| X | CN 111478784 A (HUAWEI TECHNOLOGIES CO., LTD.) 31 July 2020 (2020-07-31) description, paragraphs [0053]-[0281] | 1-59 |
| Y | CN 111510260 A (OPPO GUANGDONG MOBILE TELECOMMUNICATIONS CORP., LTD.) 07 August 2020 (2020-08-07) description, paragraphs [0092]-[0214] | 1-34, 56-59 |
| Y | CN 111478784 A (HUAWEI TECHNOLOGIES CO., LTD.) 31 July 2020 (2020-07-31) description, paragraphs [0053]-[0281] | 1-34, 56-59 |
| A | CN 111148262 A (VIVO COMMUNICATION TECHNOLOGY CO., LTD.) 12 May 2020 (2020-05-12) entire document | 1-59 |
| A | US 2021099257 A1 (QUALCOMM INCORPORATED) 01 April 2021 (2021-04-01) entire document | 1-59 |

| ✓ Further documents are listed in the continuation of Box C. | ✓ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 November 2023** | **04 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/119867**

**C.    DOCUMENTS CONSIDERED TO BE RELEVANT**

| Category* | Citation of document, with indication, where appropriate, of the relevant passages | Relevant to claim No. |
|---|---|---|
| A | HUAWEI et al. "Determination of HARQ process ID for a CG/SPS occasion" *3GPP TSG-RAN WG2 Meeting 106 R2-1907258*, 17 May 2019 (2019-05-17), entire document | 1-59 |

Form PCT/ISA/210 (second sheet) (July 2022)

## INTERNATIONAL SEARCH REPORT
### Information on patent family members

International application No.

**PCT/CN2023/119867**

| Patent document cited in search report | | | Publication date (day/month/year) | Patent family member(s) | | | Publication date (day/month/year) |
|---|---|---|---|---|---|---|---|
| CN | 111510260 | A | 07 August 2020 | US | 2020266933 | A1 | 20 August 2020 |
| | | | | EP | 3697008 | A1 | 19 August 2020 |
| | | | | US | 2020266938 | A1 | 20 August 2020 |
| | | | | EP | 3700116 | A1 | 26 August 2020 |
| | | | | JP | 2021510942 | A | 30 April 2021 |
| | | | | US | 2022069948 | A1 | 03 March 2022 |
| | | | | KR | 20200086667 | A | 17 July 2020 |
| | | | | WO | 2019091414 | A1 | 16 May 2019 |
| | | | | WO | 2019090745 | A1 | 16 May 2019 |
| | | | | CN | 111183603 | A | 19 May 2020 |
| | | | | CN | 111108710 | A | 05 May 2020 |
| CN | 111478784 | A | 31 July 2020 | WO | 2020151678 | A1 | 30 July 2020 |
| | | | | EP | 3917082 | A1 | 01 December 2021 |
| | | | | US | 2021352640 | A1 | 11 November 2021 |
| | | | | CN | 114916077 | A | 16 August 2022 |
| CN | 111148262 | A | 12 May 2020 | WO | 2020093964 | A1 | 14 May 2020 |
| US | 2021099257 | A1 | 01 April 2021 | WO | 2021062445 | A1 | 01 April 2021 |
| | | | | CN | 114424478 | A | 29 April 2022 |
| | | | | EP | 4035293 | A1 | 03 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211139045